# EUROPÄISCHE PATENTSCHRIFT

(11) **EP 2 866 933 B1**
(45) Veröffentlichungstag und Bekanntmachung des Hinweises auf die Patenterteilung: **22.08.2018**
(21) Anmeldenummer: 13731792.1
(22) Anmeldetag: 26.06.2013
(51) Int. Cl.: B01J 29/40, B01J 29/70, B01J 37/28, B01J 37/00, B01J 37/02

(54) **Verfahren zur Herstellung eines Katalysators für die Umwandlung von Oxygenaten zu Olefinen**
METHOD to manufacture a catalyst FOR THE CONVERSION OF OXYGENATES TO OLEFINS
Méthode de préparation d'un CATALYSEUR DE CONVERSION DE COMPOSÉS OXYGÉNÉS EN OLÉFINES

(30) Priorität: 29.06.2012 EP 12174288
(43) Veröffentlichungstag der Anmeldung: 06.05.2015
(73) Patentinhaber: BASF SE, 67056 Ludwigshafen am Rhein (DE)
(72) Erfinder: SPANNHOFF, Kirsten, 67063 Ludwigshafen (DE); PATCAS, Florina, Corina, 67065 Ludwigshafen (DE); BAY, Kerem, 67063 Ludwigshafen (DE); GAAB, Manuela, 69115 Heidelberg (DE); SCHWAB, Ekkehard, 67434 Neustadt (DE); HESSE, Michael, 67549 Worms (DE)
(86) Internationale Anmeldenummer: PCT/EP2013/063434
(87) Internationale Veröffentlichungsnummer: WO 2014/001410

(56) Entgegenhaltungen:
- EP-A1- 2 143 700
- EP-A2- 0 229 952
- WO-A1-2011/089263
- WO-A1-2013/017497
- WO-A2-2009/092779
- US-A- 4 504 690
- US-A- 4 548 914
- MCLNTOSH ET AL.: APPLIED CATALYSIS, Bd. 6, 1983, Seiten 307-314, XP002717328, in der Anmeldung erwähnt

## Beschreibung

Die vorliegende Erfindung betrifft die Herstellung eines Katalysators für die Umwandlung von Oxygenaten zu Olefinen.

### EINLEITUNG

Angesichts zunehmender Knappheit von Erdölvorkommen, welche als Ausgangsmaterial zur Herstellung von niederen Kohlenwasserstoffen und deren Derivaten dienen, gewinnen alternative Verfahren zur Herstellung solcher Grundchemikalien zunehmend an Bedeutung. In alternativen Verfahren zur Erzeugung von niederen Kohlenwasserstoffen und deren Derivaten werden häufig spezifische Katalysatoren eingesetzt, um aus anderen Rohstoffen und/oder Chemikalien niedere Kohlenwasserstoffe und deren Derivate wie insbesondere ungesättigte niedere Kohlenwasserstoffe möglichst selektiv zu erzeugen. Hierbei spielen Verfahren eine große Rolle, in welchen Methanol als Ausgangschemikalie einer katalytischen Umwandlung unterzogen wird, wodurch in der Regel ein Gemisch an Kohlenwasserstoffen und deren Derivaten sowie Aromaten entstehen können.

Bei solchen katalytischen Umwandlungen besteht die Herausforderung insbesondere darin, die darin verwendeten Katalysatoren sowie die Prozessführung und deren Parameter in einer Weise zu verfeinern, dass möglichst gezielt einige wenige Produkte möglichst selektiv in der katalytischen Umwandlung entstehen. Somit werden diese Verfahren insbesondere nach den Produkten benannt, welche darin hauptsächlich erzeugt werden. In den vergangenen Jahrzehnten haben solche Verfahren eine besondere Bedeutung erlangt, welche die Umwandlung von Methanol zu Olefinen ermöglichen und entsprechend als Methanol-zu-Olefin-Verfahren (MTO-Verfahren für methanol to olefins) gekennzeichnet werden. Hierzu wurden insbesondere Katalysatoren und Verfahren entwickelt, welche Methanol über das Zwischenprodukt Dimethylether zu Gemischen umwandeln, deren Hauptbestandteile Ethen und Propen ausmachen.

DD 238733 A1 betrifft beispielsweise einen mit Magnesium dotierten Zeolith und dessen Verwendung in der Umsetzung von Methanol zu niederen Olefinen, speziell des C-Zahlenbereiches ≥ 3. Mclntosh et al. in Applied Catalysis 1983, 6, S. 307-314 beschreibt speziell ZSM-5-Katalysatoren und deren Verwendung in Methanol-zu-Olefin-Verfahren, sowie deren Dotierung mit verschiedenen Metallen und Nicht-Metallen, wie beispielsweise Magnesium oder Phosphor, und deren Einfluss auf die Ausbeuten sowie die Produktverteilung bei der katalytischen Umwandlung von Methanol.

Lee et al. in Applied Catalysis A 2010, 374, S. 18-25 betrifft ZSM-5 Extrudate mit Aluminophosphat Binder und deren Verwendung in Methanol-zu-Propylen-Verfahren (MTP-Verfahren). Freiding et al. in Applied Catalysis A 2007, 328, S. 210-218 beschreibt Extrudate von ZSM-5 in einer Aluminophosphat-Sintermatrix.

US 4,049,573 betrifft ein katalytisches Verfahren zur Umwandlung von niederen Alkoholen und deren Ether und insbesondere Methanol und Dimethylether selektiv zu einem Kohlenwasserstoffgemisch mit hohem Anteil an C2-C3-Olefinen sowie einkernige Aromaten und insbesondere Para-Xylol, wobei die darin verwendeten Katalysatoren dotiert werden mit Bor, Magnesium und/oder Phosphor.

Goryainova et al. in Petroleum Chemistry 2011, Bd. 51, Nr. 3, S. 169-173 beschreibt die katalytische Umwandlung von Dimethylether zu niederen Olefinen unter Verwendung von Magnesium-haltigen Zeolithen.

Ciambelli et al. "Acid-base catalysis in the conversion of methanol to olefins over Mg-modified ZSM-5 zeolite", Successful Design of Catalysts, Elsevier Science Publishers B.V., Amsterdam, 1988, S. 239-246 untersucht den Einfluss von Magnesium im MTO-Verfahren und insbesondere in Zusammenwirkung mit ZSM-5-Zeolith als Katalysator.

Okado et al. in Applied Catalysis 1988, 41, S. 121-135 betrifft Methanol-zu-Olefin-Verfahren unter Verwendung des ZSM-5-Katalysators und untersucht dabei den Einfluss von verschiedenen Erdalkalimetallen hinsichtlich einer Deaktivierung des Katalysators während dessen Laufzeit.

WO 2012/123556 A1 betrifft einen Katalysator welcher dadurch hergestellt wird, dass ein Zeolith vom Pentasiltyp, das durch eine erste Phosphorverbindung modifiziert wurde, mit Aluminiumoxid und eine Säure vermischt und zu einem Formkörper verarbeitet wird, welcher anschließend mit einer zweiten Phosphorverbindung imprägniert wird. WO 2012/123558 A1 beschreibt einen Katalysator welcher durch Imprägnierung eines Zeolith haltigen Formkörpers mit einer Phosphorverbindung hergestellt wird, wobei der Zeolith vom Pentasiltyp ist. Schließlich betrifft WO 2012/123557 A1 einen Katalysator welcher dadurch hergestellt wird, dass ein Zeolith vom Pentasiltyp, das zunächst durch eine Phosphorverbindung modifiziert wurde welche anschließend weitgehend aus dem Zeolithen wieder entfernt wird, mit Aluminiumoxid und eine Säure vermischt und zu einem Formkörper verarbeitet wird.

Die Beispiele der EP0229952 A2 offenbaren einen Prozess zur Herstellung eines Katalysators, indem man einen Zeolith ZSM-5 mit einer Magnesiumnitrat-Lösung imprägniert, trocknet, kalziniert, und anschließend mit Aluminiumoxid extrudiert. EP0229952 A2 allgemein lehrt, dass Phosphor auf dem Katalysator mittel einer Lösung eines Phosphorsalzes , wie z.B. (NH4)2HPO4 oder NH4H2PO4, aufgebracht werden kann. Trotz der Fortschritte, welche erzielt werden konnten hinsichtlich der Selektivitäten unterschiedlicher Katalysatoren, in Verfahren zur Herstellung von niederen Kohlenwasserstoffen und deren Derivaten, deckt dies nur ein Teil der möglichen Produkte ab. Somit besteht weiterhin Bedarf an neuen Verfahren und Katalysatoren, welche hohe Selektivitäten aufweisen können hinsichtlich bestimmter Produkte und Produktmischungen, insbesondere hinsichtlich der Olefine unterschiedlicher Kettenlänge, welche in solchen Verfahren erzeugt werden. Unabhängig hiervon besteht allgemein ein Bedarf an neuen Katalysatoren und Verfahren, welche neben neuen und/oder verbesserten Selektivitäten auch eine bessere Resistenz gegenüber der allfälligen Deaktivierung in solchen Verfahren, insbesondere durch die Verkokung des Katalysators, aufweisen um dadurch eine höhere Effizienz bestehender und neuer Prozesse ermöglichen zu können.

### DETAILLIERTE BESCHREIBUNG

Somit bestand die Aufgabe der vorliegenden Erfindung darin, einen Herstellungsverfahren eines Katalysator bereitzustellen, insbesondere für die Umwandlung von Oxygenaten zu Olefinen, welcher neue und verbesserte Selektivitäten hinsichtlich bestimmter Verfahrensprodukte aufweist. Insbesondere bestand die Aufgabe der vorliegenden Erfindung darin, einen Herstellungsverfahren eines Katalysators für die Umwandlung von Oxygenaten zu Olefinen bereitzustellen, welche eine spezielle Selektivität gegenüber C3- und C4-Olefinen zeigen. Darüber hinaus bestand die Aufgabe der vorliegenden Erfindung darin, einen Herstellungsverfahren bereitzustellen, welche eine höhere Standzeit des Katalysators bei vergleichbarer Raumgeschwindigkeit und Umsatz an Oxygenaten ermöglichen. Die Aufgabe der vorliegenden Erfindung bestand weiterhin darin, einen Herstellungsverfahren eines Katalysators bereitzustellen welcher weniger unerwünschte Nebenprodukte erzeugt, insbesondere eine geringere Menge an leichte Gase wie Methan, Ethan und Propan, und insbesondere eine geringere Menge an Methan als unerwünschtes Nebenprodukt der Reaktion erzeugt.
Somit wurde überraschenderweise gefunden, dass ein Katalysator für die Umwandlung von Oxygenaten zu Olefinen, welcher ein mit Phosphor dotiertes Metalloxid zusätzlich zu einem Zeolithen vom MFI-Strukturtyp enthält, welcher Magnesium enthält, nicht nur eine überraschend hohe Selektivität hinsichtlich C3- und C4-Olefinen zeigt, sondern unerwarteterweise auch über eine erheblich verbesserte Standzeit verfügt. Insbesondere wurde unerwarteterweise gefunden, dass eine synergetische Wirkung der Dotierung eines oder mehrerer Zeolithen vom MFI-Strukturtyp mit Magnesium in Zusammenwirkung mit der Dotierung eines insbesondere als Bindemittel verwendeten Metalloxids mit Phosphor erzielt werden kann, sowohl hinsichtlich der Olefinselektivität bei Verwendung des Katalysators zur Umwandlung von Oxygenaten als auch hinsichtlich einer erheblichen Verbesserung der Resistenz des Katalysators gegenüber einer Deaktivierung während dessen Verwendung in einem katalytischen Verfahren. Darüber hinaus wurde überraschenderweise gefunden, dass zusätzlich zu den zuvor beschriebenen Vorteilen auch eine synergetische Wirkung dahingehend beobachtet wird, dass die Menge an unerwünschten Nebenprodukten und insbesondere an Methan bei der Umwandlung von Oxygenaten erheblich und nachhaltig reduziert wird durch die Kombination der Dotierung eines oder mehrerer Zeolithen vom MFI-Strukturtyp mit Magnesium mit der Dotierung eines insbesondere als Bindemittel verwendeten Metalloxids mit Phosphor.

Somit betrifft die vorliegende Erfindung ein Verfahren zur Herstellung eines Katalysators für die Umwandlung von Oxygenaten zu Olefinen in Form eines Formkörpers, wobei der Katalysator einen oder mehrere Zeolithe vom MFI-Strukturtyp und Partikel eines oder mehrerer Metalloxide enthält, wobei der eine oder die mehreren Zeolithe vom MFI-Strukturtyp ein Erdalkalimetall, und die Partikel des einen oder der mehreren Metalloxide Phosphor enthalten, wobei der Phosphor zumindest teilweise in oxidischer Form vorliegt, wobei das Erdalkalimetall Mg ist. Bezüglich der einen oder mehreren Zeolithe, welche in dem Katalysator enthalten sind, bestehen gemäß vorliegender Erfindung keinerlei Einschränkungen weder hinsichtlich der Art noch bezüglich der Anzahl an Zeolithen, welche hierin Verwendung finden können, vorausgesetzt es handelt sich dabei um Zeolithe von einem Strukturtyp MFI. Gemäß der vorliegenden Erfindung werden Zeolithe vom MFI-Strukturtyp im erfindungsgemäßen Katalysator für die Umwandlung von Oxygenaten zu Olefinen verwendet. Bezüglich dieser bevorzugten Ausführungsformen der vorliegenden Erfindung besteht ebenfalls keinerlei Einschränkung hinsichtlich Art und/oder Zahl der verwendeten Zeolithe diesen Strukturtyps, wobei der eine oder die mehreren Zeolithe vom MFI-Strukturtyp, welche im erfindungsgemäßen Katalysator verwendet werden, bevorzugt ausgewählt sind aus der Gruppe bestehend aus ZSM-5, ZBM-10, [As-Si-O]-MFI, [Fe-Si-O]-MFI, [Ga-Si-O]-MFI, AMS-1B, AZ-1, Bor-C, Boralit C, Encilit, FZ-1, LZ-105, monoklinem H-ZSM-5, Mutinait, NU-4, NU-5, Silikalit, TS-1, TSZ, TSZ-III, TZ-01, USC-4, USI-108, ZBH, ZKQ-1B, ZMQ-TB und Mischungen aus zwei oder mehr davon. Weiter bevorzugt gemäß vorliegender Erfindung enthält der Katalysator ZSM-5 und/oder ZBM-10 als Zeolith vom MFI-Strukturtyp, wobei besonders bevorzugt ZSM-5 als Zeolith verwendet wird. Bezüglich des zeolithischen Materials ZBM-10 und dessen Herstellung wird beispielsweise auf die EP 0 007 081 A1 sowie auf die EP 0 034 727 A2 verwiesen, deren Inhalt insbesondere hinsichtlich der Herstellung und Charakterisierung des Materials in die vorliegende Erfindung hiermit einbezogen wird.
Somit werden gemäß der vorliegenden Erfindung Ausführungsformen des Katalysators für die Umwandlung von Oxygenaten zu Olefinen verwendet bei welchen der eine oder die mehreren Zeolithe vom MFI-Strukturtyp sind, und bevorzugt ausgewählt sind aus der Gruppe bestehend aus ZSM-5, ZBM-10, [As-Si-O]-MFI, [Fe-Si-O]-MFI, [Ga-Si-O]-MFI, AMS-1B, AZ-1, Bor-C, Boralit C, Encilit, FZ-1, LZ-105, monoklinem H-ZSM-5, Mutinait, NU-4, NU-5, Silikalit, TS-1, TSZ, TSZ-III, TZ-01, USC-4, USI-108, ZBH, ZKQ-1B, ZMQ-TB und Mischungen aus zwei oder mehr davon, weiter bevorzugt aus der Gruppe bestehend aus ZSM-5, ZBM-10, und Mischungen davon, wobei der Zeolith vom MFI-Strukturtyp bevorzugt ZSM-5 ist.
Gemäß einer bevorzugten Ausführungsform der vorliegenden Erfindung enthält der Katalysator keine wesentlichen Mengen eines oder mehrerer nicht-zeolithischer Materialien und insbesondere keine wesentlichen Mengen eines oder mehrerer Aluminophosphate (AIPO oder APO) sowie eines oder mehrerer Aluminosilikophosphate (SAPO). Im Sinne der vorliegenden Erfindung ist der Katalysator im Wesentlichen frei von bzw. enthält keine wesentlichen Mengen eines spezifischen Materials in Fällen, in denen dieses spezifische Material in einer Menge von 1 Gew.-% oder weniger im Katalysator vorhanden ist bezogen auf 100 Gew.-% der Gesamtmenge an dem einen oder den mehreren Zeolithen vom MFI-Strukturtyp, bevorzugt in einer Menge von 0,5 Gew.-% oder weniger, weiter bevorzugt von 0,1 Gew.-% oder weniger, weiter bevorzugt von 0,05 Gew.-% oder weniger, weiter bevorzugt von 0,001 Gew.-% oder weniger, weiter bevorzugt von 0,0005 Gew.-% oder weniger und weiter bevorzugt in einer Menge von 0,0001 Gew.-% oder weniger. Ein spezifisches Material im Sinne der vorliegenden Erfindung kennzeichnet insbesondere eine bestimmtes Element oder eine besondere Kombination an Elementen, ein bestimmter Stoff oder eine bestimmte Stoffmischung, sowie auch Kombinationen und/oder Mischungen von zwei oder mehr davon.
Zu den Aluminophosphaten (AIPO und APO) im Sinne der vorliegenden Erfindung zählen allgemein alle kristalline Aluminophosphat-Phasen. Nach einer bevorzugten Definition der Aluminophosphaten (AIPO und APO) beinhalten diese die Materialien AIPO-20 sowie Zusammensetzungsvarianten davon, AlPO-5, AlPO-21, AlPO-H3, AlPO-17 sowie Zusammensetzungsvarianten davon, AlPO-12-TAMU, AlPO-11, AlPO-22, AlPO-8, AlPO-C, AlPO-25, AlPO-16, AlPO-31, AlPO-8, AlPO-H2, AlPO-31, AlPO-34, AlPO-D, AlPO-18, AlPO-EN3, AlPO-53(A), AlPO-41, Al-PO-52, AlPO4-pollucite, AlPO-24, AlPO-C, AlPO-33, AlPO-17 sowie Zusammensetzungsvarianten davon, AIPO-20 sowie Zusammensetzungsvarianten davon, AIPO-H2, AIPO-14, AIPO-54, AIPO-53(B), AIPO-40, AIPO-35, AIPO-CJB1 (ggf. mit zusätzlich vorhandenen Phosphatgruppen), AIPO-40, AIPO-36, MnAPO-11, MAPO-43, CoAPO-5, MAPO-36, MgAPO-50, ZAPO-M1, GaPO-DAB-2, CrAPO-5, CoAPO-50, MAPO-39, CoAPO-44, GaPO-34, MeAPO-47, GaPO-DAB-2, CoAPO-47, MeAPO-47, GaPO-14, CoAPO-50, CFSAPO-1A, GeAPO-11, CoAPO-5, MAPO-5 (mit M=Mg, Mn), VAPO-5, ZnAPO-5, FAPO-5, MnAPO-41, CoAPO-40, ZnAPO-40, MAPO-46, MnAPO-50, CoAPO-H3, ZnAPO-39, MAPO-31 (mit M = Zn, Mg, Mn, Co, Cr, Cu, Cd), ZnAPO-36, ZnAPO-35, FAPO-H1, MnAPO-14, ZnAPO-50, APO-CJ3, FAPO-36, MAPO-31 (mit M = Mn, Ni, Zn), VAPO-31, MAPO-5 (mit M = Cd, Cu, Mo, V/Mo, Zr) und CoAPO-CJ40. Nach einer bevorzugten Definition der Aluminophosphaten (AlPO und APO) beinhalten diese alle kristalline Aluminophosphat-Phasen welche aus Aluminium, Phosphor und Sauerstoff bestehen, und insbesondere die Materialien AlPO-5, AlPO-21, AlPO-H3, AlPO-17 sowie Zusammensetzungsvarianten davon, AlPO-12-TAMU, AlPO-11, AlPO-22, AlPO-8, AlPO-C, AlPO-25, AlPO-16, AlPO-31, AlPO-8, AlPO-H2, AlPO-31, AlPO-34, AlPO-D, AlPO-18, AlPO-EN3, AlPO-53(A), AlPO-41, AlPO-52, AlPO4-pollucite, AlPO-24, AlPO-C, AlPO-33, AlPO-17 sowie Zusammensetzungsvarianten davon, AlPO-20 sowie Zusammensetzungsvarianten davon, AlPO-H2, AlPO-14, AlPO-54, AlPO-53(B), AlPO-40, AlPO-35, AlPO-CJB1 (ggf. mit zusätzlich vorhandenen Phosphatgruppen), AlPO-40 und AlPO-36.
Zu den Aluminosilikophosphaten (SAPO) im Sinne der vorliegenden Erfindung zählen allgemein alle kristalline Aluminosilikophosphat-Phasen. insbesondere die SAPO-Materialien SAPO-11, SAPO-47, SAPO-40, SAPO-43, SAPO-5, SAPO-31, SAPO-34, SAPO-37, SAPO-35, SAPO-42, SAPO-56, SAPO-18, SAPO-41, SAPO-39 und CFSAPO-1A.

Gemäß vorliegender Erfindung enthält der eine oder die mehreren Zeolithe vom MFI-Strukturtyp Mg. Hinsichtlich der Art und Weise, in welcher das Mg in dem einen oder in den mehreren Zeolithen vom MFI-Strukturtyp des Katalysators enthalten sind, können diese grundsätzlich in den Mikroporen des einen oder der mehreren Zeolithe enthalten sein und/oder als Bestandteil des zeolithischen Gerüsts vorliegen, insbesondere zumindest teilweise in isomorpher Substitution zu einem Element des Zeolithgerüsts bevorzugt zu Silizium und/oder Aluminium als Bestandteil des Zeolithgerüsts und besonders bevorzugt zumindest teilweise in isomorpher Substitution zu Aluminium. Hinsichtlich des Vorliegens des Magnesiums in den Mikroporen des einen oder der mehreren Zeolithe können diese als eigenständige Verbindung wie beispielsweise als Salz und/oder Oxid dort vorliegen und/oder als positives Gegenion zum Zeolithgerüst. Gemäß vorliegender Erfindung liegt das Magnesium zumindest teilweise in den Poren und bevorzugt in den Mikroporen des einen oder der mehreren Zeolithe vor, wobei weiter bevorzugt das Magnesium dabei zumindest teilweise als Gegenion des Zeolithgerüsts dort vorliegen, wie dies beispielsweise bei der Herstellung des einen oder der mehreren Zeolithe in Gegenwart des Magnesiums entstehen kann und/oder durch Durchführung eines lonenaustauschs mit dem Magnesium herbeigeführt werden kann am bereits hergestellten Zeolith. Die Gesamtmenge an Magnesium in dem einen oder den mehreren Zeolithen vom MFI-Strukturtyp beträgt von 0,1-20 Gew.% bezogen auf die Gesamtmenge des einen oder der mehreren Zeolithe vom MFI-Strukturtyp. Gemäß vorliegender Erfindung ist es jedoch bevorzugt, dass das Magnesium in einer Gesamtmenge im Bereich von 0,5-15 Gew.-% bezogen auf 100 Gew.-% der Gesamtmenge an dem einen oder den mehreren Zeolithen vorliegen, weiter bevorzugt von 1-10 Gew.-%, weiter bevorzugt von 2-7 Gew.%, weiter bevorzugt von 3-5 Gew.% und weiter bevorzugt von 3,5-4,5 Gew.%. Gemäß besonders bevorzugten Ausführungsformen der vorliegenden Erfindung liegt das Magnesium in einer Gesamtmenge im Bereich von 3,8-4,2 Gew.-% in dem einen oder den mehreren Zeolithen vor. Bei allen der oben bezeichneten Gew.-%-Angaben an Magnesium in dem einen oder den mehreren Zeolithen berechnen sich diese ausgehend von dem Magnesium als Metall.
Somit werden gemäß der vorliegenden Erfindung Ausführungsformen des Katalysators für die Umwandlung von Oxygenaten zu Olefinen verwendet, bei welchen der ein oder die mehreren Zeolithe vom MFI-Strukturtyp das Magnesium in einer Gesamtmenge im Bereich von 0,1 bis 20 Gew.-%, bevorzugt von 0,5 bis 15 Gew.-%, weiter bevorzugt von 1 bis 10 Gew.-%, weiter bevorzugt von 2 bis 7 Gew.-%, weiter bevorzugt von 3 bis 5 Gew.-%, weiter bevorzugt von 3,5 bis 4,5 Gew.-%, und weiter bevorzugt im Bereich von 3,8 bis 4,2 Gew.-% enthalten, jeweils bezogen auf die Gesamtmenge des einen oder der mehreren Zeolithe vom MFI-Strukturtyp und berechnet als Metall. Gemäß alternativ bevorzugten Ausführungsformen des erfindungsgemäßen Katalysators enthalten der ein oder die mehreren Zeolithe vom MFI-Strukturtyp das Magnesium in einer Gesamtmenge im Bereich von 0,1 bis 10 Gew.-%, weiter bevorzugt von 0,5 bis 5 Gew.-%, weiter bevorzugt von 0,8 bis 3 Gew.-%, weiter bevorzugt von 1 bis 2,5 Gew.-%, weiter bevorzugt von 1,2 bis 2,2 Gew.-%, und weiter bevorzugt im Bereich von 1,6 bis 2,0 Gew.-% enthalten, jeweils bezogen auf die Gesamtmenge des einen oder der mehreren Zeolithe vom MFI-Strukturtyp und berechnet als Metall.
Gemäß vorliegender Erfindung enthält der Katalysator für die Umwandlung von Oxygenaten zu Olefinen neben den zuvor beschriebenen Zeolithen, weiter Partikel eines oder mehrerer Metalloxide. Gemäß vorliegender Erfindung werden Metalloxide bevorzugt, welche allgemein in katalytischen Materialien als inerte Materialien und insbesondere als inerte Trägersubstanzen bevorzugt mit großer BET-Oberfläche Verwendung finden. Gemäß der vorliegenden Erfindung beziehen sich Angaben zu Oberflächen eines Materials bevorzugt auf deren BET (Brunauer-Emmet-Teller)-Oberfläche, wobei diese bevorzugt nach DIN 66131 durch Stickstoffabsorption bei 77 K ermittelt werden.

Bevorzugt werden Metalloxide verwendet, welche in Verfahren für die Umwandlung von Oxygenaten zu Olefinen temperaturstabil sind, wobei die Metalloxide bevorzugt als Bindemittel dienen. Somit ist das eine oder die mehreren Metalloxide, welche in dem Katalysator Verwendung finden, ausgewählt aus der Gruppe bestehend aus Aluminiumoxid, Titandioxid, Zirkoniumdioxid, Aluminium-Titan-Mischoxiden, Aluminium-Zirkonium-Mischoxiden, Aluminium-Lanthan-Mischoxiden, Aluminium-Zirkonium-Lanthan-Mischoxiden, Titan-Zirkonium-Mischoxiden sowie Mischungen aus zwei oder mehr davon. Weiter bevorzugt gemäß vorliegender Erfindung ist das eine oder die mehreren Metalloxide ausgewählt aus der Gruppe bestehend aus Aluminiumoxid, Aluminium-Titan-Mischoxiden, Aluminium-Zirkonium-Mischoxiden, Aluminium-Lanthan-Mischoxiden, Aluminium-Zirkonium-Lanthan-Mischoxiden sowie Mischungen von zwei oder mehr davon. Gemäß vorliegender Erfindung wird besonders bevorzugt das Metalloxid Aluminiumoxid als Partikel im Katalysator verwendet.
Gemäß vorliegender Erfindung ist es weiter bevorzugt, dass das Metalloxid zumindest teilweise in amorpher Form vorliegt. Gemäß besonderen Ausführungsformen der vorliegenden Erfindung, nach welchen das Metalloxid zumindest teilweise in kristalliner Form verwendet wird, ist es bevorzugt dass der im Metalloxid enthaltene Phosphor nicht als Teil der Kristallstruktur des Metalloxids darin enthalten ist und somit kein Element oder Teil der Kristallstruktur bildet, das die Kristallinität des Metalloxids zumindest teilweise bedingen würde. Insbesondere wurde gemäß der vorliegenden Erfindung überraschenderweise festgestellt, dass speziell in Zusammenwirkung mit einem oder mehreren Erdalkalimetallen-enthaltenden Zeolithen gemäß vorliegender Erfindung, das Aufbringen von Phosphor auf einem Metalloxid als Bindemittel in einem Verfahren für die Umwandlung von Oxygenaten zu Olefinen nicht nur die Bildung von Koks auf dem Katalysator effektiv unterdrückt, wodurch die Standzeit erheblich verlängert werden kann, sondern auch unerwarteterweise die Bildung von unerwünschten Nebenprodukten und insbesondere von Methan erheblich und nachhaltig reduziert.
Somit werden gemäß der vorliegenden Erfindung Ausführungsformen des Katalysators für die Umwandlung von Oxygenaten zu Olefinen verwendet, bei welchen das eine oder die mehreren Metalloxide ausgewählt sind aus der Gruppe bestehend aus Aluminiumoxid, Titandioxid, Zirkoniumdioxid, Aluminium-Titan-Mischoxiden, Aluminium-Zirkonium-Mischoxiden, Aluminium-Lanthan-Mischoxiden, Aluminium-Zirkonium-Lanthan-Mischoxiden, Titan-Zirkonium-Mischoxiden und Mischungen von zwei oder mehr davon, bevorzugt aus der Gruppe bestehend aus Aluminiumoxid, Aluminium-Titan-Mischoxiden, Aluminium-Zirkonium-Mischoxiden, Aluminium-Lanthan-Mischoxiden, Aluminium-Zirkonium-Lanthan-Mischoxiden und Mischungen von zwei oder mehr davon, wobei das Metalloxid besonders bevorzugt Aluminiumoxid ist.
Gemäß der vorliegenden Erfindung enthalten die Partikel des einen oder der mehreren Metalloxide Phosphor. Hinsichtlich der Form, in welcher der Phosphor in den Partikeln des einen oder der mehreren Metalloxide enthalten ist, besteht gemäß vorliegender Erfindung keinerlei besondere Einschränkung, vorausgesetzt zumindest ein Teil des Phosphors liegt in oxidischer Form vor. Gemäß vorliegender Erfindung liegt Phosphor in oxidischer Form vor, sofern dieser in Verbindung mit Sauerstoff vorliegt, d. h. sofern zumindest ein Teil des Phosphors zumindest teilweise in einer Verbindung mit Sauerstoff vorliegt, wobei insbesondere ein Teil des Phosphors mit dem Sauerstoff kovalent gebunden ist. Gemäß vorliegender Erfindung ist es bevorzugt, dass der Phosphor, welcher zumindest teilweise in oxidischer Form vorliegt, Oxide des Phosphors und/oder Oxid-Derivate des Phosphors enthält. Als Oxide des Phosphors gemäß vorliegender Erfindung zählen insbesondere Phosphortrioxid, Diphosphortetraoxid, Phosphorpentoxid und Mischungen von zwei oder mehr davon. Weiterhin ist es gemäß vorliegender Erfindung bevorzugt, dass der Phosphor und insbesondere der Phosphor in oxidischer Form zumindest teilweise in amopher Form vorliegt, wobei der Phosphor und insbesondere der Phosphor in oxidischer Form weiter bevorzugt im Wesentlichen in amorpher Form vorliegt. Gemäß vorliegender Erfindung liegt der Phosphor und insbesondere der Phosphor in oxidischer Form im Wesentlichen in amorpher Form vor wenn der Anteil an Phosphor und insbesondere an Phosphor in oxidischer Form welcher in kristalliner Form im Katalysator vorliegt 1 Gew.-% oder weniger beträgt bezogen auf 100 Gew.-% der Gesamtmenge an den Partikeln des einen oder der mehreren Metalloxide, wobei der Phosphor als Element berechnet wird, bevorzugt in einer Menge von 0,5 Gew.-% oder weniger, weiter bevorzugt von 0,1 Gew.-% oder weniger, weiter bevorzugt von 0,05 Gew.-% oder weniger, weiter bevorzugt von 0,001 Gew.-% oder weniger, weiter bevorzugt von 0,0005 Gew.-% oder weniger und weiter bevorzugt in einer Menge von 0,0001 Gew.-% oder weniger.
Bezüglich der Art und Weise, in welcher der Phosphor, welcher zumindest teilweise in oxidischer Form vorliegt, in dem einen oder den mehreren Metalloxiden des Katalysators enthalten ist, besteht gemäß vorliegender Erfindung keinerlei besondere Einschränkung, weder hinsichtlich der Art, in welcher dieser vorliegt, noch hinsichtlich der Menge an Phosphor, welche in dem einen oder den mehreren Metalloxiden enthalten ist. Hinsichtlich der Art, in welcher der Phosphor vorliegt, kann dieser somit prinzipiell auf dem einen oder den mehreren Metalloxiden als Element und/oder als eine oder mehrere eigenständige Verbindungen aufgebracht sein und/oder in dem einen oder den mehreren Metalloxiden eingebaut sein, beispielsweise in Form einer Dotierung des einen oder der mehreren Metalloxide, wobei dies insbesondere Ausführungsformen umfasst, in welchen der Phosphor und das eine oder die mehreren Metalloxide zumindest teilweise Mischoxide und/oder feste Lösungen bilden. Gemäß vorliegender Erfindung wird der Phosphor teilweise in Form einer oder mehrerer Oxide und/oder Oxidderivate auf das eine oder die mehreren Metalloxide in den Partikeln aufgebracht, wobei das eine oder die mehreren Oxide und/oder Oxidderivate des Phosphors aus einer Behandlung des einen oder der mehreren Metalloxide mit einer oder mehreren Säuren des Phosphors. Unter der einen oder den mehreren Säuren des Phosphors werden eine oder mehrere Säuren bezeichnet, ausgewählt aus der Gruppe bestehend aus Phosphonsäure, Phosphorsäure, Diphosphonsäure, Diphosphorsäure, und Mischungen von zwei oder mehr davon. Weiter bevorzugt ist die eine oder die mehreren Phosphorsäuren ausgewählt aus der Gruppe bestehend aus Phosphorsäure, Diphosphorsäure und Mischungen davon, wobei gemäß besonders bevorzugten Ausführungsformen der vorliegenden Erfindung der in dem einen oder den mehreren Metalloxiden enthaltene Phosphor zumindest teilweise aus einer Behandlung des einen oder der mehreren Metalloxide mit Phosphorsäure stammt. Gemäß einer weiteren Ausführungsform, welche gemäß vorliegender Erfindung bevorzugt ist, enthält der eine oder die mehreren Zeolithe vom MFI-Strukturtyp ebenfalls Phosphor. Bezüglich der Form, in welcher der in dem einen oder den mehreren Zeolithen enthaltenen Phosphor vorliegt, gilt das Gleiche wie in der vorliegenden Anmeldung beschrieben hinsichtlich des Phosphors, welcher in dem einen oder in den mehreren Metalloxiden enthalten ist insbesondere bezüglich dessen teilweisen Vorliegens in oxidischer Form. Hinsichtlich der Art und Weise, in welcher der Phosphor in dem einen oder in den mehreren Zeolithen enthalten ist, gilt nach vorliegender Erfindung, dass dieser bevorzugt in den Poren des Zeolithgerüsts und insbesondere in dessen Mikroporen enthalten ist, entweder als eigenständige Phosphor enthaltende Verbindung und/oder als Gegenion zu dem Zeolithgerüst, wobei der Phosphor besonders bevorzugt zumindest teilweise als eigenständige Verbindung in den Poren des Zeolithgerüsts vorliegt.
Somit werden gemäß der vorliegenden Erfindung Ausführungsformen des Katalysators für die Umwandlung von Oxygenaten zu Olefinen bevorzugt, bei welchen der eine oder die mehreren Zeolithe vom MFI-Strukturtyp Phosphor enthalten, wobei der Phosphor zumindest teilweise in oxidischer Form vorliegt.

Bezüglich des Mengenverhältnisses, in welchem der eine oder die mehreren Zeolithe vom MFI-Strukturtyp einerseits und die Partikel eines oder mehrerer Metalloxide andererseits in dem Katalysator gemäß vorliegender Erfindung enthalten sind, gilt prinzipiell keine besondere Einschränkung, wobei das Mengenverhältnis bevorzugt einer solchen entspricht, welche für die Verwendung des Katalysators in zumindest einer der bevorzugten erfindungsgemäßen Verwendungen des Katalysators nach den besonderen und bevorzugten Verwendungen wie in der vorliegenden Anmeldung beschrieben, und insbesondere eine Verwendung für die Umwandlung von Oxygenaten zu Olefinen geeignet ist. Somit kann das Gewichtsverhältnis von Zeolith zu Metalloxid im Katalysator gemäß vorliegender Erfindung und insbesondere gemäß den besonderen und bevorzugten Ausführungsformen der vorliegenden Erfindung im Bereich von 10:90 bis 95:5 liegen. Gemäß vorliegender Erfindung liegt das Gewichtsverhältnis Zeolith:Metalloxid allerdings bevorzugt im Bereich von 20:80 bis 90:10, weiter bevorzugt im Bereich von 40:60 bis 80:20 und weiter bevorzugt im Bereich von 50:50 bis 70:30. Gemäß besonders bevorzugten Ausführungsformen der vorliegenden Erfindung liegt das Gewichtsverhältnis Zeolith:Metalloxid im Bereich von 55:45 bis 65:45. Im Sinne der vorliegenden Erfindung kennzeichnet das Gewichtsverhältnis Zeolith:Metalloxid insbesondere das Gewichtsverhältnis des Gesamtgewichts des einen oder aller der mehreren Zeolithe zu dem Gesamtgewicht der Partikel des einen oder aller der mehreren Metalloxide.
Somit werden gemäß der vorliegenden Erfindung Ausführungsformen des Katalysators für die Umwandlung von Oxygenaten zu Olefinen bevorzugt, bei welchen das Gewichtsverhältnis Zeolith : Metalloxid im Katalysator im Bereich von 10 : 90 bis 95 : 5, bevorzugt im Bereich von 20 : 80 bis 90 : 10, weiter bevorzugt im Bereich von 40 : 60 bis 80 : 20, weiter bevorzugt im Bereich von 50 : 50 bis 70 : 30, und weiter bevorzugt im Bereich von 55 : 45 bis 65 : 45 liegt.
Was die Menge an Phosphor angeht, welche in dem Katalysator gemäß der vorliegenden Erfindung enthalten sein kann, gilt prinzipiell keinerlei Beschränkung, so dass alle denkbar möglichen Gehalte an Phosphor in dem Katalysator enthalten sein können, wobei diese bevorzugt so gewählt sind, dass der Katalysator in zumindest einer der besonderen oder bevorzugten katalytischen Verwendungen wie in der vorliegenden Anmeldung beschrieben verwendet werden kann und insbesondere für die Umwandlung von Oxygenaten zu Olefinen Verwendung finden kann. Somit kann die Gesamtmenge an Phosphor im Katalysator gemäß der vorliegenden Erfindung beispielsweise im Bereich von 0,1-20 Gew.-% liegen, wobei sich die Gesamtmenge an Phosphor auf die Summe aus dem Gesamtgewicht an Zeolithen vom MFI-Strukturtyp und das Gesamtgewicht der Partikel des einen oder der mehreren Metalloxide bezieht, wobei der Phosphor als Element berechnet wird. Gemäß der vorliegenden Erfindung liegt die Gesamtmenge an Phosphor in dem Katalysator jedoch bevorzugt im Bereich von 0,5-15 Gew.-%, weiter bevorzugt im Bereich von 1-10 Gew.-%, weiter bevorzugt von 2-7 Gew.-%, weiter bevorzugt von 2,5-5 Gew.-%, weiter bevorzugt von 3,5-4,5 Gew.-%, weiter bevorzugt von 3,3-4,2 Gew.-% und weiter bevorzugt von 3,5-4 Gew.-%. Gemäß besonders bevorzugten Ausführungsformen der vorliegenden Erfindung liegt die Gesamtmenge an Phosphor im Katalysator bezogen auf die Summe aus dem Gesamtgewicht an Zeolithen und das Gesamtgewicht der Partikel des einen oder der mehreren Metalloxide im Bereich von 3,7-3,9 Gew.-%, wobei der Phosphor als Element berechnet wird.
Somit werden gemäß der vorliegenden Erfindung Ausführungsformen des Katalysators für die Umwandlung von Oxygenaten zu Olefinen bevorzugt, bei welchen die Gesamtmenge an Phosphor, bezogen auf die Summe aus dem Gesamtgewicht an Zeolithen vom MFI-Strukturtyp und das Gesamtgewicht der Partikel des einen oder der mehreren Metalloxide und berechnet als Element, im Bereich von 0,1 bis 20 Gew.-%, bevorzugt von 0,5 bis 15 Gew.-%, weiter bevorzugt von 1 bis 10 Gew.-%, weiter bevorzugt von 2 bis 7 Gew.-%, weiter bevorzugt von 2,5 bis 5 Gew.-%, weiter bevorzugt von 3 bis 4,5 Gew.-%, weiter bevorzugt von 3,3 bis 4,2 Gew.-%, weiter bevorzugt von 3,5 bis 4 Gew.-%, und weiter bevorzugt im Bereich von 3,7 bis 3,9 Gew.-% liegt.
Bezüglich der Form, in welcher der Katalysator gemäß der vorliegenden Erfindung vorliegt, bestehen ebenfalls keinerlei Einschränkungen, so dass der eine oder die mehreren Zeolithe sowie die Partikel des einen oder der mehreren Metalloxide, welche darin enthalten sind, prinzipiell in jeder möglichen und geeigneten Art und Weise zu einem Katalysator zusammengefügt werden können, wobei die Form bevorzugt so gewählt wird, dass der Katalysator zumindest in einer der besonderen oder bevorzugten Verwendungen wie in der vorliegenden Anmeldung beschrieben und insbesondere für die Verwendung eines Katalysators zur Umwandlung von Oxygenaten zu Olefinen geeignet ist. In diesem Zusammenhang liegt der Katalysator bevorzugt in Form eines Formkörpers vor, welcher ein Gemisch des einen oder der mehreren Zeolithe vom MFI-Strukturtyp der Partikel des einen oder der mehreren Metalloxide enthält, bevorzugt des einen oder der mehreren Zeolithe und der Partikel des einen oder der mehreren Metalloxide gemäß einem der besonderen oder bevorzugten Ausführungsformen wie in der vorliegenden Anmeldung beschrieben. Gemäß einer besonders bevorzugten Ausführungsform der vorliegenden Erfindung ist der Formkörper ein Extrudat.
Somit werden gemäß der vorliegenden Erfindung Ausführungsformen des Katalysators für die Umwandlung von Oxygenaten zu Olefinen bevorzugt, bei welchen der Katalysator, und insbesondere der Katalysator gemäß einer der besonderen und bevorzugten Ausführungsformen der vorliegenden Erfindung, in Form eines Formkörpers vorliegt, enthaltend ein Gemisch des einen oder der mehreren Zeolithe vom MFI-Strukturtyp und der Partikel des einen oder der mehreren Metalloxide

Somit betrifft die vorliegende Erfindung ein Verfahren zur Herstellung eines Katalysators gemäß vorliegender Erfindung, und insbesondere eines Katalysators gemäß einer der besonderen oder bevorzugten Ausführungsformen dieser, umfassend
(i) Bereitstellen des einen oder der mehreren Zeolithe vom MFI-Strukturtyp;
(ii) Imprägnieren des einen oder der mehreren Zeolithe vom MFI-Stukturtyp mit einer Lösung, enthaltend das eine Erdalkalimetall bevorzugt mittels Sprühtränkung;
(iii) optionales Trocknen des oder der in (ii) erhaltenen ein oder der mehreren imprägnierten Zeolithe;
(iv) optionales Kalzinieren des oder der in (ii) oder (iii) erhaltenen ein oder mehreren imprägnierten Zeolithe;
(v) Herstellen eines Gemischs, enthaltend den einen oder die mehreren imprägnierten und optional getrockneten und/oder kalzinierten Zeolithe vom MFI-Strukturtyp, ein oder mehrere Lösungsmittel und Partikel des einen oder der mehreren Metalloxide und/oder Vorläuferverbindungen des einen oder der mehreren Partikel des einen oder der mehreren Metalloxide;
(vi) Homogenisieren des in (v) erhaltenen Gemischs;
(vii) Extrudieren des in (vi) erhaltenen homogenisierten Gemischs;
(viii) optionales Trocknen des in (vii) erhaltenen Extrudats
(ix) optionales Kalzinieren des in (vii) oder (viii) erhaltenen Extrudats;
(x) Imprägnieren des optional getrockneten und/oder kalzinierten Extrudats mit einer Phosphor enthaltenden Lösung, welche eine oder mehrere Säuren des Phosphors enthält ausgewählt aus der Gruppe bestehend aus Phosphonsäure, Phosphorsäure, Diphosphonsäure, Diphosphorsäure und Mischungen von zwei oder mehr davon;
(xi) optionales Trocknen des in (x) erhaltenen imprägnierten Extrudats;
(xii) Kalzinieren des in (x) oder (xi) erhaltenen Extrudats.
Darüber hinaus betrifft die vorliegende Erfindung alternativ ein Verfahren zur Herstellung eines Katalysators gemäß vorliegender Erfindung, und insbesondere eines Katalysators gemäß einer der besonderen oder bevorzugten Ausführungsformen dieser, umfassend
(i) Bereitstellen des einen oder der mehreren Zeolithe vom MFI-Strukturtyp;
(ii) Imprägnieren des einen oder der mehreren Zeolithe vom MFI-Stukturtyp mit einer Lösung, enthaltend das eine Erdalkalimetall bevorzugt mittels Sprühtränkung;
(iii) optionales Trocknen des oder der in (ii) erhaltenen ein oder der mehreren imprägnierten Zeolithe;
(iv) optionales Kalzinieren des oder der in (ii) oder (iii) erhaltenen ein oder mehreren imprägnierten Zeolithe;
(v.1) Herstellen eines Gemischs, enthaltend den einen oder die mehreren imprägnierten und optional getrockneten und/oder kalzinierten Zeolithe vom MFI-Strukturtyp Strukturtyp und Partikel des einen oder der mehreren Metalloxide und/oder Vorläuferverbindungen des einen oder der mehreren Partikel des einen oder der mehreren Metalloxide;
(v.2) Versetzen des in (v.1) erhaltenen Gemischs mit einer Phosphor enthaltenden Lösung, welche eine oder mehrere Säuren des Phosphors enthält ausgewählt aus der Gruppe bestehend aus Phosphonsäure, Phosphorsäure, Diphosphonsäure, Diphosphorsäure und Mischungen von zwei oder mehr davon;
(v.3) Vermischen des in (v.2) erhaltenen Gemischs mit einem oder mehreren Lösungsmittel;
(vi) Homogenisieren des in (v.3) erhaltenen Gemischs;
(vii) Extrudieren des in (vi) erhaltenen homogenisierten Gemischs;
(viii) optionales Trocknen des in (vii) erhaltenen Extrudats;
(ix) Kalzinieren des in (vii) oder (viii) erhaltenen Extrudats.
Gemäß dem erfindungsgemäßen Verfahren zur Herstellung eines Katalysators gemäß vorliegender Erfindung ist es somit prinzipiell möglich Phosphor in das eine oder die mehreren Metalloxide einzubringen durch die Herstellung eines Metalloxid enthaltenden Extrudats und dessen anschließende Imprägnierung mit einer Phosphor enthaltenden Lösung. Nach dem alternativen Verfahren zur Herstellung eines Katalysators gemäß vorliegender Erfindung kann Phosphor bereits während der Herstellung des Extrudats eingebracht werden, und zwar durch Versetzen des einen oder der mehreren Metalloxide oder deren Vorläuferverbindungen. Im Vergleich zu ersterem Verfahren hat das alternative Verfahren den Vorteil, dass ein Katalysator gemäß vorliegender Erfindung direkt als Extrudat in (vii) erhalten werden kann, während nach ersterem Verfahren ein erfindungsgemäßer Katalysator erst nach einem zusätzlichen Imprägnierungsschritt (x) mit einer Phosphor enthaltenden Lösung erhalten wird.

Bezüglich der Form in welcher der eine oder die mehreren Zeolithe vom MFI-Strukturtyp in Schritt (i) bereitgestellt werden besteht prinizipiell keinerlei Einschränkung, insbesondere hinsichtlich der weiteren Elemente oder Verbindungen welche darin enthalten sein können. Somit besteht generell keinerlei Einschränkungen bezüglich der Ionen und Verbindungen welche in den Mikroporen des einen oder der mehreren Zeolithe enthalten sein können, insbesondere hinsichtlich der Gegenionen zum gegebenenfalls negativ geladenen Zeolithgerüst welche sich in den Mikroporen befinden. Entsprechend kann der eine oder die mehreren Zeolithe in einer Form vorliegen, in welcher die gegebenenfalls negative Ladung des Zeolithgerüsts durch eine oder mehrere verschiedene kationische Elemente und/oder Verbindunaen kompensiert wird, wobei dies bevorzugt mindestens zum Teil durch ein oder mehrere kationische Elemente und/oder Verbindungen erfolgt welche ausgewählt sind aus der Gruppe bestehend aus H⁺, NH₄⁺, Li⁺, Na⁺, K⁺ und Kombinationen von zwei oder mehr davon, weiter bevorzugt aus der Gruppe bestehend aus H⁺, Na⁺, K⁺ und Kombinationen von zwei oder mehr davon. Gemäß besonders bevorzugten Ausführungsformen der vorliegenden Erfindung enthält der eine oder die mehreren Zeolithe vom MFI-Strukturtyp gegebenenfalls H⁺ und/oder Na⁺, und bevorzugt H⁺ als Gegenion zum negativ geladenen Zeolithgerüst, womit der eine oder die mehereren Zeolithe vom MFI-Strukturtyp besonders bevorzugt in ihrer jeweiligen H-Form in Schritt (i) des erfindungsgemäßen Verfahrens bereitgestellt werden.
Gemäß den besonders bevorzugten Ausführungsformen der vorliegenden Erfindung nach welchen der eine oder die mehreren Zeolithe vom MFI-Strukturtyp in Schritt (i) zumindest teilweise in deren H-Form jeweils bereitgestellt werden, können diese durch entsprechenden lonenaustausch in die gewünschte H-Form gebracht werden. Gemäß den bevorzugten Ausführungsformen des Verfahrens zur Herstellung des Katalysators nach welchen der eine oder die mehreren Zeolithe für die Bereitstellung in (i) gegebenenfalls in die H-Form gebracht werden, bestehen prinzipiell keine besonderen Einschränkungen hinsichtlich der Art und Weise auf welcher dies durchgeführt wird, wobei die Überführung des einen oder der mehreren Zeolithe bevorzugt durch lonenaustausch erfolgt. Hinsichtlich der bevorzugten Ausführungsformen des Verfahrens zur Herstellung des Katalysators nach welchen die Überführung des einen oder der mehreren Zeolithe vom MFI-Strukturtyp in die H-Form über einen oder mehrere Schritte eines lonenaustauschs für die Bereitstellung in Schritt (i) erfolgt besteht wiederum keine besonderen Einschränkungen hinsichtlich der Art und Weise wie diese durchgeführt werden, vorausgesetzt zumindest ein Teil der Gegenionen zum Zeolithgerüst durch H⁺-Ionen ausgetauscht werden können. Nach bevorzugten Ausführungsformen wird zwecks lonenaustausch der eine oder die mehreren Zeolithe mit einer Lösung einer protonierten leichtflüchtigen Base in Kontakt gebracht, bevorzugt eines protonierten leichtflüchtigen Amins, besonders bevorzugt mit einer Ammoniumsalz-Lösung, oder alternativ hierzu mit einer Säure und bevorzugt mit einer wässerigen Säure-Lösung in Kontakt gebracht, bevorzugt mit einer wässerigen Lösung einer Mineralsäure. Hinsichtlich der Ammoniumsalze welche bevorzugt verwendet werden besteht keine generelle Einschränkung, vorausgesetzt der Austausch zumindest eines Teils der in dem einen oder den mehreren Zeolithen enthaltenen Gegenionen durch Ammonium erfolgen kann. So können zu diesem Zweck beispielsweise ein oder mehrere Ammoniumsalze verwendet werden ausgewählt aus der Gruppe bestehend aus NH₄NO₃, NH₄Cl, (NH₄)₂SO₄ sowie Mischungen aus zwei oder mehr davon. Gleiches gilt entsprechend hinsichtlich der Säuren und insbesondere der Mineralsäuren welche zwecks lonenaustausch eingesetzt werden können, vorausgesetzt der Austausch zumindest eines Teils der in dem einen oder den mehreren Zeolithen enthaltenen Gegenionen durch H⁺ erfolgen kann. Somit können beispielsweise Lösungen der Mineralsäuren HNO₃, HCl, H₂SO₄ sowie auch Mischungen von zwei oder mehr davon für den lonenaustausch eingesetzt werden. Hinsichtlich der Konzentration der für den bevorzugten lonenaustausch verwendeten Lösungen an protonierten leichtflüchtigen Basen oder an Säuren besteht keinerlei besondere Einschränkung, vorausgesetzt zumindest ein Teil der Gegenionen des Zeolithgerüsts kann ausgetauscht werden, und im Falle der Verwendung einer oder mehreren Säuren, dass der pH-Wert der Lösung zu keiner wesentlichen Auflösung des Zeolithgerüsts führt. Somit können beispielsweise Lösungen der Salze oder der Säuren verwendet werden mit einer Konzentration von 1 bis 50 Gew.-%, wobei bevorzugt Konzentrationen von 5 bis 30 Gew.-%, und besonders bevorzugt von 10 bis 25 Gew.% für den lonenaustausch verwendet werden. Gleiches gilt entsprechend hinsichtlich des Gewichtsverhältnisses von Salz- oder Säurelösung zu dem einen oder den mehreren Zeolithen welche ionenausgetauscht werden. Somit kann das Gewichtsverhältnis der verwendeten Lösung für den lonenaustausch zu dem einen oder den mehreren Zeolithen beispielweise im Bereich von 1 bis 20 liegen, wobei das Gewichtsverhältnis bevorzugt im Bereich von 2 bis 10, und weiter bevorzugt im Bereich von 4 bis 7 liegt.

Gemäß besonders bevorzugten Ausführungsformen wird somit ein lonenaustausch vor Bereitstellen des einen oder der mehreren Zeolithe in Schritt (i) durchgeführt. Gemäß den besonders bevorzugten Ausführungsformen der Herstellung des im erfindungsgemäßen Verfahren verwendeten Katalysators in welchen ein Schritt des lonenaustauschs mit einer protonierten leichtflüchtigen Base, und bevorzugt mit einem protonierten leichtflüchtigen Amin, besonders bevorzugt mit Ammonium, durchgeführt wird, ist es weiter bevorzugt dass nach dem lonenausstausch und nach einem optionalen Waschritt und/oder nach einem optionalen Trocknungsschritt ein weiterer Schritt des Kalzinierens durchgeführt wird um die leichtflüchtige Base und besonders bevorzugt Ammoniak vollständig aus dem ionenausgetauschten Zeolith zu entfernen.

Bezüglich der Art und Weise des Imprägnierens in Schritt (ii) und in (x) des erfindungsgemäßen Verfahrens kann die Imprägnierung nach einem beliebigen geeigneten Verfahren durchgeführt werden, wie beispielsweise einer Imprägnierung durch Tränkung, Sprühtränkung und/oder Kapillarimprägnierung. Gemäß besonders bevorzugten Ausführungsformen des erfindungsgemäßen Verfahrens wird die Imprägnierung in Schritt (ii) jedoch durch Sprühtränkung erzielt.

Hinsichtlich der Feststoffkonzentration des in (v) oder (v.3) bereitgestellten Gemischs bestehen gemäß vorliegender Erfindung keinerlei besondere Einschränkungen, vorausgesetzt dass ein Homogenisieren des Gemischs gemäß Schritt (vi) sowie ein Extrudieren des in (vi) erhaltenen homogenisierten Gemischs in (vii) möglich ist. Somit kann die Feststoffkonzentration des in (v) oder (v.3) bereitgestellten Gemischs beispielsweise im Bereich von 60-90 Gew.-% liegen, wobei die Feststoffkonzentration gemäß vorliegender Erfindung bevorzugt im Bereich von 65-85 Gew.-% und weiter bevorzugt im Bereich von 70-80 Gew.-% liegt. Gemäß besonders bevorzugten Ausführungsformen des erfindungsgemäßen Verfahrens zur Herstellung eines Katalysators liegt die Feststoffkonzentration des in (v) oder (v.3) bereitgestellten Gemischs im Bereich von 73-77 Gew.-%.

Auch hinsichtlich des Homogenisierens in Schritt (vi) besteht gemäß vorliegender Erfindung keinerlei besondere Einschränkung, so dass jede erdenkliche Verfahrensweise gewählt werden kann, um ein homogenes Gemisch des in Schritt (v) oder (v.3) hergestellten Gemischs zu erzeugen, wobei hierfür beispielsweise ein oder mehrere Verfahren verwendet werden können, ausgewählt aus der Gruppe bestehend aus Rühren, Kneten, Schütteln, Vibration oder Kombination aus zwei oder mehr davon. Gemäß vorliegender Erfindung wird das in Schritt (v) oder (v.3) hergestellte Gemisch bevorzugt durch Rühren und/oder durch Kneten in Schritt (vi) homogenisiert, wobei besonders bevorzugt die Homogenisierung in Schritt (vi) durch Kneten erfolgt.
Gemäß besonders bevorzugten Ausführungsformen des erfindungsgemäßen Verfahrens zur Herstellung eines Katalysators wird bei der Herstellung des Gemischs in Schritt (v) zunächst ein erstes Gemisch enthaltend den einen oder die mehreren imprägnierten und optional getrockneten und/oder kalzinierten Zeolithe vom MFI-Strukturtyp und die Partikel des einen oder der mehreren Metalloxide und/oder Vorläuferverbindungen des einen oder der mehreren Partikel des einen oder der mehreren Metalloxide hergestellt, welches bevorzugt vor Hinzufügung des einen oder mehreren Lösungsmittels mit einem Peptisierhilfsmittel behandelt wird, wobei die Peptisierung bevorzugt mittels einer Säurebehandlung durchgeführt wird. Bezüglich der für die bevorzugten Säurebehandlung verwendeten Säure besteht gemäß vorliegender Erfindung keinerlei besondere Einschränkung hinsichtlich der Menge oder der Art der Säure, welche für die Säurebehandlung verwendet werden, wobei diese jeweils so gewählt werden, dass die Komponenten des ersten Gemischs nur angeätzt werden und der eine oder die mehreren Zeolithe sowie die Partikel des einen oder der mehreren Metalloxide und/oder Vorläuferverbindungen dieser hierdurch nur unwesentlich angegriffen werden, insbesondere so dass ihre Wirkung als Katalysator hierdurch nicht substantiell eingeschränkt wird. Gemäß vorliegender Erfindung werden somit bevorzugt schwache Säuren und insbesondere kurzkettige Carbonsäuren zu diesem Zweck verwendet, bevorzugt (C₁-C₄)-Carbonsäuren, weiter bevorzugt (C₁-C₃)-Carbonsäuren), weiter bevorzugt Essig und/oder Ameisensäure, wobei insbesondere Ameisensäure für die bevorzugte Säurebehandlung eingesetzt wird.
Gemäß der Alternative des erfindungsgemäßen Verfahrens nach welchem in (v.2) das in (v.1) erhaltene Gemisch mit einer oder mehreren Säuren des Phosphors versetzt wird, ist es jedoch bevorzugt dass die Peptisierung mittels dieses Schritts erfolgt. Bezüglich der für die Säurebehandlung verwendeten Säure oder Säuren des Phosphors besteht gemäß vorliegender Erfindung keinerlei besondere Einschränkung hinsichtlich der Menge oder der Art der Säure oder Säuren des Phosphors, welche für die Säurebehandlung verwendet werden, wobei diese bevorzugt so gewählt werden, dass die Komponenten des ersten Gemischs nur angeätzt werden und der eine oder die mehreren Zeolithe sowie die Partikel des einen oder der mehreren Metalloxide und/oder Vorläuferverbindungen dieser hierdurch nur unwesentlich angegriffen werden, insbesondere so dass ihre Wirkung als Katalysator hierdurch nicht substantiell eingeschränkt wird. Gemäß vorliegender Erfindung kann somit prinzipiell jede geeignete Säure des Phosphors verwendet werden, sowie auch jede geeignete Mischung von zwei oder mehreren Säuren des Phosphors. Gemäß Ausführungsformen der Alternative des erfindungsgemäßen Verfahrens werden in (v.2) eine oder mehrere Säuren des Phosphors verwendet welche ausgewählt sind aus der Gruppe bestehend aus Phosphonsäure, Phosphorsäure, Diphosphonsäure, Diphosphorsäure und Mischungen von zwei oder mehr davon, weiter bevorzugt aus der Gruppe bestehend aus Phosphorsäure, Diphosphorsäure und Mischungen davon, wobei gemäß besonders bevorzugten Ausführungsformen der Alternative des erfindungsgemäßen Verfahrens nach welchem in (v.2) das in (v.1) erhaltene Gemisch mit einer oder mehreren Säuren des Phosphors veresetzt wird, Phosphorsäure hierfür verwendet wird.
Gemäß weiter bevorzugten Ausführungsformen des erfindungsgemäßen Verfahrens zur Herstellung eines Katalysators wird ein Viskositätszusatz und bevorzugt ein Plastifizierhilfsmittel für die Herstellung des Gemischs in (v) oder (v.3) verwendet. Bezüglich der Viskositätszusätze und insbesondere der Plastifizierhilfsmittel welche gemäß den bevorzugten Ausführungsformen des erfindungsgemäßen Verfahrens verwendet werden können bestehen keine besonderen Einschränkungen, vorausgesetzt diese sind geeignet die Viskosität des Gemischs in gewünschter Weise zu beeinflussen, und insbesondere um eine Viskosität des in (v) oder (v.3) erhaltenen Gemischs und insbesondere des in (vi) erhaltenen homogenisierten Gemischs herzustellen, welche für das Extrudieren des homogenisierten Gemischs in Schritt (vii) geeignet ist. Besonders bevorzugt werden Viskositätszusätze und insbesondere der Plastifizierhilfsmittel gemäß vorliegender Erfindung verwendet, welche aus dem Extrudat zumindest teilweise und bevorzugt weitgehend restlos entfernt werden können, insbesondere durch den optionalen Schritt des Trocknens in (viii) und/oder durch den optionalen Schritt des Kalzinierens in Schritt (ix) wobei weiter bevorzugt ein Plastifizierhilfsmittel verwendet wird welches sich in Schritt (viii) und/oder (ix) aus dem Extrudat verflüchtigt und/oder durch eine Thermolyse in Schritt (viii) bei bevorzugter Erhitzung des Extrudats und/oder in Schritt (ix) durch eine Pyrolyse zu flüchtigen Verbindungen und insbesondere zu Gasen zersetzt, welche aus dem Extrudat entsprechend entweichen können. Somit können nach den bevorzugten Ausführungsformen prinzipiell jede geeignete Substanz oder jedes geeignete Substanzgemische als Plastifizierungshilfsmittel verwendet werden, wobei solche bevorzugt verwendet werden welche gemäß den besonderen und bevorzugten Ausführungsformen des erfindungsgemäßen Verfahrens zur Herstellung eines Katalysators aus dem Extrudat zumindest teilweise und bevorzugt weitgehend restlos entfernt werden können. Als Plasitifizierhilfsmittel werden somit bevorzugt organische Substanzen oder Substanzgemische und insbesondere organische Polymere verwendet, und weiter bevorzugt Stärkederivate.
Bezüglich der Viskosität des in (v) oder (v.3) erhaltenen Gemischs und insbesondere des in (vi) erhaltenen homogenisierten Gemischs besteht prinzipiell keine besonderen Einschränkungen gemäß vorliegender Erfindung, vorausgesetzt die Viskosität ist dazu geeignet um ein Extrudat in Schritt (vii) zu erhalten. Somit kann die Viskosität des in (v) oder (v.3) erhaltenen Gemischs und insbesondere des in (vi) erhaltenen homogenisierten Gemischs im Bereich von 0,1 x 10⁴ bis 4 x 10⁴ N/m² liegen, wobei die Viskosität bevorzugt im Bereich von 0,5 x 10⁴ bis 3 x 10⁴ N/m² liegt, weiter bevorzugt von 1 x 10⁴ bis 2,5 x 10⁴ N/m² liegt, weiter bevorzugt von 1,3 x 10⁴ bis 2 x 10⁴ N/m² liegt, weiter bevorzugt von 1,5 x 10⁴ bis 1,8 x 10⁴ N/m² liegt, weiter bevorzugt von 1,55 x 10⁴ bis 1,7 x 10⁴ N/m² liegt, weiter bevorzugt von 1,6 x 10⁴ bis 1,65 x 10⁴ N/m² liegt. Gemäß der vorliegenden Erfindung bezieht sich die Viskosität bevorzugt auf die Viskosität welche mit einem Curd-Meter, und besonders bevorzugt eines "Curdmeter MAX ME-500" (der Firma Asuka Kiki) gemessen wird. Die Imprägnierung führt nach optionalem Trocknen in Schritt (xi) bzw. (viii) und dem Kalzinieren in Schritt (xii) bzw. (ix) zu einer zumindest teilweise oxidischen Form des in den Partikeln des ein oder der mehrere Metalloxide enthaltenen Phosphors.

Gemäß vorliegender Erfindung wird eine Phosphor enthaltende Lösung in Schritt (x) bzw. (v.2) verwendet, welche eine oder mehrere Säuren des Phosphors enthält ausgewählt aus der Gruppe bestehend aus Phosphonsäure, Phosphorsäure, Diphosphonsäure, Diphosphorsäure und Mischungen von zwei oder mehr davon, bevorzugt als wässrige Lösung. Besonders bevorzugt werden phosphorsäurehaltige Lösungen zum Imprägnieren des optional getrockneten und/oder kalzinierten Extrudats in Schritt (x) bzw. zum Versetzen des in (v.1) erhaltenen Gemischs in Schritt (v.2) des erfindungsgemäßen Verfahrens verwendet, bevorzugt wässrige Phosphorsäurelösungen.
Bezüglich der Phosphor enthaltenden Lösungen, insbesondere der gemäß den besonderen und bevorzugten Ausführungsformen der vorliegenden Erfindung, besteht prinzipiell keinerlei Einschränkung hinsichtlich der Konzentration des Phosphors, welches darin enthalten ist, vorausgesetzt es kann eine geeignete Imprägnierung des optional getrockneten und/oder kalzinierten Extrudats in Schritt (x) erreicht werden bzw. dass es sich zum Versetzen des in (v.1) erhaltenen Gemischs in Schritt (v.2) eignet. Gemäß der bevorzugten Ausführungsformen der vorliegenden Erfindung, in welchen phosphor- und sauerstoffhaltige Säuren verwendet werden, können somit beispielsweise Gesamtkonzentrationen der phosphor- und sauerstoffhaltigen Salze und/oder Säuren in den Lösungen verwendet werden, welche im Bereich von 0,1 bis 90 Gew.-% der verwendeten Lösung und bevorzugt der verwendeten wässrigen Lösungen liegen. Gemäß vorliegender Erfindung werden jedoch bevorzugt Konzentrationen der phosphor- und sauerstoffhaltigen Salze und/oder Säuren gemäß den besonderen und bevorzugten Ausführungsformen der Erfindung verwendet, welche im Bereich von 0,5 bis 70 Gew.-% liegen, weiter bevorzugt von 1 bis 50 Gew.-%, weiter bevorzugt von 5 bis 40 Gew.-%, weiter bevorzugt von 10 bis 35 Gew.-%, weiter bevorzugt von 15 bis 30 Gew.-% und noch weiter bevorzugt von 18 bis 25 Gew.-%. Gemäß besonders bevorzugter Ausführungsformen des erfindungsgemäßen Verfahrens liegt die Konzentration der bevorzugten phosphor- und sauerstoffhaltigen Säuren in Schritt (x) des erfindungsgemäßen Verfahrens in dem Bereich von 19 bis 22 Gew.-% bezogen auf das Gesamtgewicht der verwendeten Lösung. Gemäß der Alternative des erfindungsgemäßen Verfahrens nach welchem in (v.2) das in (v.1) erhaltene Gemisch mit einer Phosphor enthaltenden Lösung, mit einer oder mehreren Säuren des Phosphors und weiter bevorzugt mit Phosphorsäure versetzt wird, werden Gesamtkonzentrationen der phosphor- und sauerstoffhaltigen Säuren in den Lösungen bevorzugt verwendet, welche im Bereich von 5 bis 99 Gew.-% der verwendeten Lösung und bevorzugt der verwendeten wässrigen Lösungen liegen. Gemäß vorliegender Erfindung werden jedoch bevorzugt Konzentrationen der phosphor- und sauerstoffhaltigen Säuren gemäß den besonderen und bevorzugten Ausführungsformen der Erfindung verwendet, welche im Bereich von 10 bis 98 Gew.-% liegen, weiter bevorzugt von 30 bis 95 Gew.-%, weiter bevorzugt von 50 bis 92 Gew.-%, weiter bevorzugt von 60 bis 90 Gew.-%, weiter bevorzugt von 70 bis 89 Gew.-% und noch weiter bevorzugt von 80 bis 88 Gew.-%. Gemäß besonders bevorzugter Ausführungsformen des erfindungsgemäßen Verfahrens liegt die Konzentration der bevorzugten phosphor- und sauerstoffhaltigen Säuren in Schritt (x) des erfindungsgemäßen Verfahrens in dem Bereich von 83 bis 87 Gew.-% bezogen auf das Gesamtgewicht der verwendeten Lösung
Gemäß bestimmten Ausführungsformen der Alternative des erfindungsgemäßen Verfahrens nach welchem in (v.2) das in (v.1) erhaltene Gemisch mit einer Phosphor enthaltenden Lösung versetzt wird, wird anschließend das optional getrocknete und/oder kalzinierte Extrudat welches in (vii), (viii) und/oder (ix) entsprechend erhalten wird, in einem anschließenden Schrit (x) gemäß dem erfindungsgemäßen Verfahren oder den besonderen und bevorzugten Ausführungsformen davon mit einer mit einer Phosphor enthaltenden Lösung imprägniert. Entsprechend dem erfindungsgemäßen Verfahren werden nach diesen Ausführungsformen der Alternative des erfindungsgemäßen Verfahrens das in (x) erhaltene imprägnierte Extrudat in einem weiteren Schritt (xi) gemäß dem erfindungsgemäßen Verfahren oder den besonderen und bevorzugten Ausführungsformen davon optional getrocknet, sowie in einem weiteren Schritt (xii) gemäß dem erfindungsgemäßen Verfahren kalziniert. Dementsprechend beinhaltet die Herstellung nach den genannten Ausführungsformen ein zweifaches Einbringen des Phosphors in das eine oder die mehreren Metalloxide und/oder deren Vorläuferverbidungen in (v.2) sowie in (x). Ausführungsformen der Alternative des erfindungsgemäßen Verfahrens zur Herstellung des erfindungsgemäßen Katalysators sind jedoch besonders bevorzugt, nach welchem keine Imprägnierung des in (vii), (viii) und/oder (ix) erhaltenen Extrudats mit Phosphor oder einer Phosphor-haltigen Verbindung erfolgt. Somit wird ein besonders effizientes Verfahren zur Herstellung des erfindungsgemäßen Katalysators bereitgestellt.
Gemäß dem erfindungsgemäßen Verfahren zur Herstellung des erfindungsgemäßen Katalysators, insbesondere gemäß der in der vorliegenden Anmeldung beschriebenen besonderen und bevorzugten Ausführungsformen, besteht prinzipiell keinerlei Einschränkung hinsichtlich der Beschaffenheit und insbesondere der Partikelgrößen und/oder Morphologien des einen oder der mehreren in Schritt (i) bereitgestellten Zeolithe vom MFI-Strukturtyp. Je nach Partikelgröße der bereitgestellten Zeolithe in Schritt (i) werden jedoch optional ein oder mehrere Schritte während des erfindungsgemäßen Verfahrens durchgeführt, bevorzugt nach dem Imprägnieren in Schritt (ii) oder nach dem optionalen Trocknen in Schritt (iii) oder nach dem optionalen Kalzinieren in Schritt (iv), um den einen oder die mehreren Zeolithe auf eine bevorzugte Partikelgröße zu bringen. In diesem Zusammenhang besteht zunächst keine besondere Einschränkung hinsichtlich der Partikelgröße des einen oder der mehreren Zeolithe, vorausgesetzt, diese ist für die Durchführung der weiteren Schritte im erfindungsgemäßen Verfahren, insbesondere gemäß den besonderen und bevorzugten Ausführungsforme der vorliegenden Erfindung, geeignet, wobei die Partikelgröße insbesondere zur Durchführung des Extrudierens in Schritt (vii) geeignet sein soll, insbesondere in Abhängigkeit von der Größe und/oder Form des extrudierten Körpers. Somit werden bei bestimmten Ausführungsformen des erfindungsgemäßen Verfahrens ein oder mehrere Schritte nach dem Imprägnieren in Schritt (ii) oder nach dem optionalen Trocknen in Schritt (iii) oder nach dem optionalen Kalzinieren in Schritt (iv) durchgeführt, um den einen oder die mehreren imprägnierten und optional getrockneten und/oder kalzinierten Zeolithe vom MFI-Strukturtyp auf eine Partikelgröße D₅₀ im Bereich von 5 bis 1000 µm zu bringen. Nach weiter bevorzugten Ausführungsformen des erfindungsgemäßen Verfahrens werden der eine oder die mehreren Zeolithe nach einem oder mehreren der zuvor genannten Schritte in einem oder mehreren Schritten auf eine Partikelgröße D₅₀ im Bereich von 10 bis 750 µm, weiter bevorzugt von 30 bis 500 µm, weiter bevorzugt von 50 bis 300 µm, weiter bevorzugt von 70 bis 200 µm und noch weiter bevorzugt von 80 bis 150 µm gebracht. Nach noch weiteren bevorzugten Ausführungsformen des erfindungsgemäßen Verfahrens werden der eine oder die mehreren imprägnierten und optional getrockneten und/oder kalzinierten Zeolithe nach dem Imprägnieren in Schritt (ii) oder nach dem Trocknen in Schritt (iii) oder nach dem Kalzinieren in Schritt (iv) in einem oder mehreren Schritten auf eine Partikelgröße D₅₀ im Bereich von 90 bis 120 µm gebracht. Hinsichtlich der Anzahl der Schritte und der Art und Weise, auf welche der eine oder die mehreren Zeolithe auf eine besondere oder bevorzugte Partikelgröße D₅₀ gebracht werden, bestehen gemäß vorliegender Erfindung keinerlei Einschränkungen, so dass jedes geeignete Verfahren hierfür prinzipiell verwendet werden kann. Gemäß der vorliegenden Erfindung werden der eine oder die mehreren Zeolithe jedoch bevorzugt einem oder mehreren Schritten des Mahlens nach einem oder mehreren der Schritte (ii) sowie der optionalen Schritte (iii) und (iv) unterzogen.
Somit werden gemäß der vorliegenden Erfindung Ausführungsformen des Verfahren zur Herstellung eines Katalysators gemäß vorliegender Erfindung, und insbesondere eines Katalysators gemäß einer der besonderen oder bevorzugten Ausführungsformen dieser, bevorzugt, gemäß welchen nach dem Imprägnieren in (ii) oder nach dem Trocknen in (iii) oder nach dem Kalzinieren in (iv) der eine oder die mehreren imprägnierten Zeolithe vom MFI-Strukturtyp auf eine Partikelgröße D₅₀ im Bereich von 5 bis 1.000 µm, weiter bevorzugt von 10 bis 750 µm, weiter bevorzugt von 30 bis 500 µm, weiter bevorzugt von 50 bis 300 µm, weiter bevorzugt von 70 bis 200 µm, weiter bevorzugt von 80 bis 150 µm, noch weiter bevorzugt von 90 bis 120 µm gebracht werden, bevorzugt durch Mahlen.
Gemäß der vorliegenden Erfindung wird im erfindungsgemäßen Verfahren ein Schritt des Trocknens nach einem oder mehreren der Schritte (iii), (viii) und/oder (xi) durchgeführt. Bezüglich der Art und Weise, durch welche die optionale Trocknung in einem oder mehreren dieser Schritte erzielt wird, besteht prinzipiell keinerlei Einschränkung, so dass die Trocknung bei jeder geeigneten Temperatur sowie in jeder geeigneten Atmosphäre durchgeführt werden kann. Somit kann die optionale Trocknung unter Schutzgasatmosphäre oder in Luft erfolgen, wobei die optionale Trocknung bevorzugt in Luft erfolgt. Bezüglich der Temperatur, bei welcher die Trocknung erfolgt, kann beispielsweise eine Temperatur gewählt werden, welche im Bereich von 50 bis 220 °C liegt. Gemäß vorliegender Erfindung erfolgt die optionale Trocknung nach einem oder mehreren der Schritte (iii), (viii) und/oder (xi) bei einer Temperatur im Bereich von 70 bis 180 °C, weiter bevorzugt von 80 bis 150 °C, weiter bevorzugt von 90 bis 130 °C und weiter bevorzugt im Bereich von 100 bis 125 °C. Gemäß besonders bevorzugten Ausführungsformen des erfindungsgemäßen Verfahrens erfolgt die Trocknung nach einem oder mehreren der Schritte (iii), (viii) und/oder (xi) bei einer Temperatur im Bereich von 110 bis 120 °C. Bezüglich der Dauer des einen oder der mehreren optionalen Schritte des Trocknens, insbesondere gemäß besonderen und bevorzugten Ausführungsformen des erfindungsgemäßen Verfahrens besteht keine besondere Einschränkung, sofern eine für die weiteren Verfahrensschritte geeignete Trocknung erzielt werden kann, beispielsweise nach einem Trocknungsschritt mit einer Dauer von 1 bis 50 Stunden. Gemäß besonderen Ausführungsformen des erfindungsgemäßen Verfahrens wird das optionale Trocknen für eine Dauer von 5 bis 40 h durchgeführt, weiter bevorzugt von 8 bis 30 h, weiter bevorzugt von 10 bis 25 h, weiter bevorzugt von 12 bis 20 h und noch weiter bevorzugt von 14 bis 18 h.
Somit werden gemäß der vorliegenden Erfindung Ausführungsformen des Verfahren zur Herstellung eines Katalysators gemäß vorliegender Erfindung, und insbesondere eines Katalysators gemäß einer der besonderen oder bevorzugten Ausführungsformen dieser, bevorzugt, gemäß welchen das Trocknen in (iii), (viii) und/oder (xi) bei einer Temperatur im Bereich von 50 bis 220°C, bevorzugt von 70 bis 180°C, weiter bevorzugt von 80 bis 150°C, weiter bevorzugt von 90 bis 130°C, weiter bevorzugt von 100 bis 125°C, und weiter bevorzugt von 110 bis 120°C erfolgt.

Hinsichtlich der Schritte des Kalzinierens gemäß vorliegender Erfindung gilt prinzipiell das Gleiche wie bezüglich der optionalen Schritte des Trocknens, so dass auch hier keinerlei besondere Einschränkung existiert, weder hinsichtlich der Temperatur, noch hinsichtlich der Atmosphäre, in welcher die Kalzinierung durchgeführt wird, und schließlich auch nicht hinsichtlich der Dauer einer Kalzinierung gemäß den besonderen und bevorzugten Ausführungsformen der vorliegenden Erfindung, solange es sich bei dem Produkt der Kalzinierung um ein Zwischenprodukt handelt, welches sich dazu eignet, in den weiteren Schritten des erfindungsgemäßen Verfahrens zu einem Katalysator gemäß vorliegender Erfindung verarbeitet werden zu können. Somit kann beispielsweise hinsichtlich der Temperatur des optionalen Kalzinierens in einem oder mehreren der Schritte (iv), (ix) und/oder (xii) eine Temperatur im Bereich von 300 bis 850 °C gewählt werden, wobei bevorzugt eine Temperatur im Bereich von 350 bis 750 °C, weiter bevorzugt von 400 bis 700 °C, weiter bevorzugt von 450 bis 650 °C und noch weiter bevorzugt von 480 bis 600 °C gewählt wird. Gemäß noch weiter bevorzugter Ausführungsformen der vorliegenden Erfindung wird die Kalzinierung in einem oder mehreren der Schritte (iv), (ix) und/oder (xii) bei einer Temperatur von 500 bis 550 °C durchgeführt. Hinsichtlich der Atmosphäre, in welcher die Kalzinierung gemäß einem oder mehreren der zuvor genannten Schritte des erfindungsgemäßen Verfahrens durchgeführt wird, so kann es sich hierbei sowohl um eine inerte Atmosphäre als auch um Luft handeln, wobei die Kalzinierung in einem oder mehreren der Schritte (iv), (ix) und/oder (xii) bevorzugt in Luft durchgeführt wird. Schließlich besteht auch keinerlei Einschränkung bezüglich der Dauer des Kalzinierungsschrittes in den optionalen Schritten (iv), (ix) und (xii), sofern sich das Produkt der Kalzinierung zur weiteren Verwendung eignet, insbesondere als Zwischenprodukt gemäß den Schritten (iv) und/oder (ix), in dem erfindungsgemäßen Verfahren zur Herstellung eines Katalysators, insbesondere eines Katalysators gemäß einer der besonderen oder bevorzugten Ausführungsformen der vorliegenden Anmeldung. Somit kann die Dauer der Kalzinierung nach einem oder mehreren der Kalzinierungsschritte in (iv), (ix) und/oder (xii) beispielsweise 0,5 bis 20 Stunden betragen, wobei eine Dauer von 1 bis 15 h bevorzugt wird, weiter bevorzugt von 2 bis 10 h, weiter bevorzugt von 3 bis 7 h und eine Dauer von 4 bis 5 h besonders bevorzugt ist.
Somit werden gemäß der vorliegenden Erfindung Ausführungsformen des Verfahren zur Herstellung eines Katalysators gemäß vorliegender Erfindung, und insbesondere eines Katalysators gemäß einer der besonderen oder bevorzugten Ausführungsformen dieser, bevorzugt, gemäß welchen das Kalzinieren in (iv), (ix) und/oder (xii) bei einer Temperatur im Bereich von 300 bis 850°C, bevorzugt von 350 bis 750°C, weiter bevorzugt von 400 bis 700°C, weiter bevorzugt von 450 bis 650°C, weiter bevorzugt von 480 bis 600°C, und weiter bevorzugt von 500 bis 550°C erfolgt.

Gemäß den Schritten (ii) und (x) des erfindungsgemäßen Verfahrens werden der eine oder die mehreren Zeolithe vom MFI-Strukturtyp zunächst mit einer Erdalkalimetallenthaltenden Lösung imprägniert bzw. das optional getrocknete und kalzinierte Extrudat wird mit einer Phosphor enthaltenden Lösung imprägniert. Gemäß vorliegender Erfindung besteht keinerlei Einschränkung, weder hinsichtlich Schritt (ii) noch hinsichtlich Schritt (x), was die Art und/oder Anzahl der hierfür verwendeten Lösungsmittel betrifft. Somit kann prinzipiell jedes geeignete Lösungsmittel oder Lösungsmittelgemisch in den Schritten (ii) und (x) verwendet werden, sofern dieses geeignet ist, eine entsprechende Imprägnierung der dort definierten Materialien herbeizuführen, insbesondere nach den besonderen und bevorzugten Ausführungsformen der vorliegenden Erfindung. Dies gilt gleichermaßen für das eine oder die mehreren Lösungsmittel, welche in Schritt (v) oder (v.3) zum Herstellen des dort definierten Gemischs verwendet werden, sofern das eine oder die mehreren hierfür verwendeten Lösungsmittel geeignet sind, ein Homogenisieren in Schritt (vi) sowie das Extrudieren in Schritt (vii) zu ermöglichen. So können beispielsweise in einem oder mehreren der Schritte (ii), (x) und/oder (v) oder (v.3) ein oder mehrere Lösungsmittel, ausgewählt aus der Gruppe bestehend aus Alkoholen, Wasser, Mischungen von zwei oder mehr Alkoholen und Mischungen von Wasser und einem oder mehreren Alkoholen, verwendet werden. Gemäß bevorzugter Ausführungsformen der vorliegenden Erfindung werden das in (ii), (x) und/oder (v) oder (v.3) verwendete eine oder die mehreren Lösungsmittel ausgewählt aus der Gruppe bestehend aus (C₁-C₆)-Alkoholen, Wasser, Mischungen von zwei oder mehreren (C₁-C₆)-Alkoholen und Mischungen von Wasser und einem oder mehreren (C₁-C₆)-Alkoholen, wobei das eine oder die mehreren Lösungsmittel weiter bevorzugt aus der Gruppe bestehend aus (C₁-C₄)-Alkoholen, Wasser, Mischungen von zwei oder mehreren (C₁-C₄)-Alkoholen und Mischungen von Wasser und einem oder mehreren (C₁-C₄)-Alkoholen sind. Gemäß weiter bevorzugter Ausführungsformen werden das eine oder die mehreren Lösungsmittel in den Schritten (ii), (x) und/oder (v) oder (v.3) ausgewählt aus der Gruppe bestehend aus Methanol, Ethanol, n-Propanol, Isopropanol, Wasser und Mischungen von zwei oder mehr davon, weiter bevorzugt aus der Gruppe bestehend aus Methanol, Ethanol, Wasser und Mischungen von zwei oder mehr davon, wobei noch weiter bevorzugt das Lösungsmittel Wasser ist, bevorzugt destilliertes Wasser.
Somit werden gemäß der vorliegenden Erfindung Ausführungsformen des Verfahren zur Herstellung eines Katalysators gemäß vorliegender Erfindung, und insbesondere eines Katalysators gemäß einer der besonderen oder bevorzugten Ausführungsformen dieser, bevorzugt, gemäß welchen die in (ii) und/oder (x) oder (v.2) verwendete Lösung und/oder das in (v) oder (v.3) hergestellte Gemisch ein oder mehrere Lösungsmittel enthält, ausgewählt aus der Gruppe bestehend aus Alkoholen, Wasser, Mischungen von zwei oder mehreren Alkoholen, und Mischungen von Wasser und einem oder mehreren Alkoholen, bevorzugt aus der Gruppe bestehend aus (C₁-C₆) Alkoholen, Wasser, Mischungen von zwei oder mehreren (C₁-C₆) Alkoholen, und Mischungen von Wasser und einem oder mehreren (C₁-C₆) Alkoholen, weiter bevorzugt (C₁-C₄) Alkoholen, Wasser, Mischungen von zwei oder mehreren (C₁-C₄) Alkoholen, und Mischungen von Wasser und einem oder mehreren (C₁-C₄) Alkoholen, weiter bevorzugt bestehend aus Methanol, Ethanol, n-Propanol, Isopropanol, Wasser und Mischungen von zwei oder mehr davon, weiter bevorzugt bestehend aus Methanol, Ethanol, Wasser und Mischungen von zwei oder mehr davon, wobei weiter bevorzugt das Lösungsmittel Wasser, bevorzugt destilliertes Wasser ist.
Neben einem Katalysator für die Umwandlung von Oxygenaten zu Olefinen gemäß vorliegender Erfindung wie in der vorliegenden Anmeldung beschrieben und insbesondere gemäß den besonderen und bevorzugten Ausführungsformen derselben betrifft die vorliegende Erfindung ebenfalls solche Katalysatoren für die Umwandlung von Oxygenaten zu Olefinen, welche gemäß dem erfindungsgemäßen Herstellungsverfahren erhältlich sind, d. h. auch Katalysatoren an sich, welche beispielsweise gemäß dem erfindungsgemäßen Herstellungsverfahren erhalten werden können, ohne zwingend nach diesem Verfahren hergestellt sein zu müssen. Insbesondere betrifft die vorliegende Erfindung somit Katalysatoren für die Umwandlung von Oxygenaten zu Olefinen, welche gemäß dem erfindungsgemäßen Verfahren, insbesondere gemäß in der vorliegenden Anmeldung beschriebenen besonderen und bevorzugten Ausführungsformendesselben erhalten werden können, jedoch nach einem anderen hierfür geeigneten Verfahren hergestellt werden können oder wurden.
Somit werden gemäß der vorliegenden Erfindung Ausführungsformen des Katalysators für die Umwandlung von Oxygenaten zu Olefinen bevorzugt, bei welchen der Katalysator, und insbesondere der Katalysator gemäß einer der besonderen oder bevorzugten Ausführungsformen der vorliegenden Erfindung, nach dem erfindungsgemäßen Verfahren zur Herstellung eines Katalysators erhältlich ist, bevorzugt nach einem der besonderen oder bevorzugten Ausführungsformen des erfindungsgemäßen Verfahrens.
Neben einem Katalysator für die Umwandlung von Oxygenaten zu Olefinen sowie einem Verfahren zur Herstellung eines solchen Katalysators betrifft die vorliegende Erfindung auch ein Verfahren zur Umwandlung von Oxygenaten zu Olefinen. Insbesondere betrifft die vorliegende Erfindung ein solches Verfahren umfassend:
(1) Bereitstellen eines Gasstroms enthaltend ein oder mehrere Oxygenate;
(2) Inkontaktbringen des Gasstroms mit einem Katalysator gemäß der vorliegenden Erfindung.
Hinsichtlich des Katalysators, welcher im erfindungsgemäßen Verfahren zur Umwandlung von Oxygenaten zu Olefinen verwendet werden kann, besteht prinzipiell keinerlei Einschränkung, vorausgesetzt, es handelt sich um einen Katalysator gemäß vorliegender Erfindung, wie er gemäß dem erfindungsgemäßen Verfahren erhältlich ist, und sofern dieser Katalysator sich für die Umwandlung mindestens eines Oxygenats zu mindestens einem Olefin eignet. Dies gilt insbesondere für die Ausführungsformen des erfindungsgemäßen Katalysators gemäß den besonders und bevorzugten Ausführungsformen der vorliegenden Erfindung.

Gleiches gilt entsprechend für das/die in dem Gasstrom gemäß (1) enthaltene(n) eine oder mehrere Oxygenat(e), so dass gemäß dem erfindungsgemäßen Verfahren hierbei prinzipiell keinerlei Einschränkung gegeben ist, sofern das eine oder die mehreren Oxygenate, welche in dem Gasstrom gemäß (1) enthalten sind, von einem der Katalysatoren gemäß vorliegender Erfindung und insbesondere gemäß ihren besonderen und bevorzugten Ausführungsformen zu mindestens einem Olefin beim Inkontaktbringen gemäß (2) umgewandelt werden können. Gemäß vorliegender Erfindung ist es jedoch bevorzugt, dass das eine oder die mehreren im Gasstrom gemäß (1) enthaltenen Oxygenate ausgewählt sind aus der Gruppe bestehend aus aliphatischen Alkoholen, Ethern, Carbonylverbindungen und Mischungen von zwei oder mehr davon. Weiter bevorzugt ist das eine oder die mehreren Oxygenate ausgewählt aus der Gruppe bestehend aus (C₁-C₆)-Alkoholen, Di-(C₁-C₃)alkylethern, (C₁-C₆)-Aldehyden, (C₂-C₆)-Ketonen und Mischungen von zwei oder mehr davon, weiter bevorzugt bestehend aus (C₁-C₄)-Alkoholen, Di-(C₁-C₂)alkylethern, (C₁-C₄)-Aldehyden, (C₂-C₄)-Ketonen und Mischungen von zwei oder mehr davon. Gemäß noch weiter bevorzugten Ausführungsformen der vorliegenden Erfindung enthält der Gasstrom gemäß (1) ein oder mehrere Oxygenate ausgewählt aus der Gruppe bestehend aus Methanol, Ethanol, n-Propanol, Isopropanol, Butanol, Dimethylether, Diethylether, Ethylmethylether, Diisopropylether, Di-n-propylether, Formaldehyd, Dimethylketon und Mischungen von zwei oder mehr davon, wobei weiter bevorzugt das eine oder die mehreren Oxygenate ausgewählt sind aus der Gruppe bestehend aus Methanol, Ethanol, Dimethylether, Diethylether, Ethylmethylether und Mischungen von zwei oder mehr davon. Gemäß besonders bevorzugten Ausführungsformen des erfindungsgemäßen Verfahrens zur Umwandlung von Oxygenaten zu Olefinen enthält der der Gasstrom gemäß (1) Methanol und/oder Dimethylether als das eine oder die mehreren Oxygenate, wobei besonders bevorzugt Dimethylether das in dem Gasstrom gemäß (1) enthaltene Oxygenat ist.

Somit werden gemäß der vorliegenden Erfindung Ausführungsformen des Verfahrens zur Umwandlung von Oxygenaten zu Olefinen bevorzugt, bei welchen der Gasstrom gemäß (1) ein oder mehrere Oxygenaten enthält, ausgewählt aus der Gruppe bestehend aus aliphatischen Alkoholen, Ethern, Carbonylverbindungen und Mischungen von zwei oder mehr davon, bevorzugt bestehend aus (C₁-C₆) Alkoholen, Di-(C₁-C₃)alkylethern, (C₁-C₆) Aldehyden, (C₂-C₆) Ketonen und Mischungen von zwei oder mehr davon, weiter bevorzugt bestehend aus (C₁-C₄) Alkoholen, Di-(C₁-C₂)alkylethern, (C₁-C₄) Aldehyden, (C₂-C₄) Ketonen und Mischungen von zwei oder mehr davon, weiter bevorzugt aus der Gruppe bestehend aus Methanol, Ethanol, n-Propanol, Isopropanol, Butanol, Dimethylether, Diethylether, Ethylmethylether, Diisopropylether, Di-n-propylether, Formaldehyd, Dimethylketon und Mischungen von zwei oder mehr davon, weiter bevorzugt aus der Gruppe bestehend aus Methanol, Ethanol, Dimethylether, Diethylether, Ethylmethylether und Mischungen von zwei oder mehr davon, wobei der Gasstrom weiter bevorzugt Methanol und/oder Dimethylether, und besonders bevorzugt Dimethylether enthält.

Was andererseits den Gehalt an Oxygenaten in dem Gasstrom gemäß (1) dem erfindungsgemäßen Verfahren zur Umwandlung von Oxygenaten zu Olefinen betrifft, so besteht gemäß vorliegender Erfindung auch hier keinerlei Einschränkung, sofern beim Inkontaktbringen des Gasstroms in (2) mit einem Katalysator gemäß vorliegender Erfindung mindestens ein Oxygenat zu mindestens einem Olefin umgesetzt werden kann. Gemäß bevorzugter Ausführungsformen liegt der Gehalt an Oxygenaten in dem Gasstrom gemäß (1) im Bereich von 30 bis 100 Vol.-% bezogen auf das Gesamtvolumen, wobei sich der Gehalt insbesondere auf einen Gasstrom bei einer Temperatur im Bereich von 200 bis 700°C und bei einem Druck von 101,3 kPa bezieht, bevorzugt bei einer Temperatur im Bereich von 250 bis 650°C, weiter bevorzugt von 300 bis 600°C, weiter bevorzugt von 350 bis 560°C, weiter bevorzugt von 400 bis 540°C, weiter bevorzugt von 430 bis 520°C, und weiter bevorzugt im Bereich von 450 bis 500°C und bei einem Druck von 101,3 kPa. Gemäß vorliegender Erfindung ist es weiter bevorzugt, dass der Gehalt an Oxygenaten in dem Gasstrom gemäß (1) im Bereich von 30 bis 99 Vol.-% liegt, weiter bevorzugt von 30 bis 95 Vol.-%, weiter bevorzugt von 30 bis 90 Vol.-%, weiter bevorzugt von 30 bis 80 Vol.-%, weiter bevorzugt von 30 bis 70 Vol.-%, weiter bevorzugt von 30 bis 60 Vol.-% und weiter bevorzugt von 30 bis 50 Vol.-%. Gemäß besonders bevorzugten Ausführungsformen des erfindungsgemäßen Verfahrens zur Umwandlung von Oxygenaten zu Olefinen liegt der Gehalt an Oxygenaten in dem Gasstrom gemäß (1) im Bereich von 30 bis 45 Vol.-%.

Somit werden gemäß der vorliegenden Erfindung Ausführungsformen des Verfahrens zur Umwandlung von Oxygenaten zu Olefinen bevorzugt, bei welchen der Gehalt an Oxygenaten in dem Gasstrom gemäß (1) im Bereich von 30 bis 100 Vol.-% bezogen auf das Gesamtvolumen liegt, bevorzugt von 30 bis 99 Vol.-%, weiter bevorzugt von 30 bis 95 Vol.-%, weiter bevorzugt von 30 bis 90 Vol.-%, weiter bevorzugt von 30 bis 80 Vol.-%, weiter bevorzugt von 30 bis 70 Vol.-%, weiter bevorzugt von 30 bis 60 Vol.-%, weiter bevorzugt von 30 bis 50 Vol.-%, und weiter bevorzugt von 30 bis 45 Vol.-%.

Was die anderen Komponenten in dem Gasstrom gemäß (1) dem erfindungsgemäßen Verfahrens betrifft, besteht prinzipiell keinerlei Einschränkung, vorausgesetzt der Gasstrom ist insgesamt zur Umwandlung mindestens eines der Oxygenate zu mindestens einem Olefin in Schritt (2) beim Inkontaktbringen mit einem Katalysator gemäß vorliegender Erfindung geeignet. Weiterhin können beispielsweise neben dem einem oder den mehreren Oxygenaten im Gasstrom gemäß (1) ein oder mehrere Inertgase darin enthalten sein, wie beispielsweise ein oder mehrere Edelgase, Stickstoff, Kohlenstoffmonoxid, Kohlenstoffdioxid, Wasser und Mischungen von zwei oder mehr davon. Gemäß besonderen Ausführungsformen der vorliegenden Erfindung enthält der Gasstrom gemäß (1) des erfindungsgemäßen Verfahrens neben dem einen oder den mehreren Oxygenaten Wasser.

Hinsichtlich jener bevorzugten Ausführungsformen, in welchen neben dem einen oder den mehreren Oxygenaten Wasser im Gasstrom gemäß (1) enthalten ist, besteht prinzipiell keine Beschränkung hinsichtlich des Gehalts an Wasser, welcher darin enthalten sein kann, sofern die Umwandlung von mindestens einem Oxygenat im Gasstrom zu mindestens einem Olefin in Schritt (2) des Inkontaktbringens des Gasstroms mit einem Katalysator gemäß der vorliegenden Erfindung erfolgen kann. Gemäß dieser bevorzugten Ausführungsformen ist es jedoch bevorzugt, dass der Gehalt an Wasser in dem Gasstrom im Bereich von 5 bis 60 Vol.-% bezogen auf das Gesamtvolumen liegt, wobei der Gehalt an Wasser besonders bevorzugt im Bereich von 10 bis 55 Vol.-% liegt, weiter bevorzugt von 20 bis 50 Vol.-% und weiter bevorzugt von 30 bis 45 Vol.-%.

Somit werden gemäß der vorliegenden Erfindung Ausführungsformen des Verfahrens zur Umwandlung von Oxygenaten zu Olefinen bevorzugt, bei welchen Wasser in dem Gasstrom gemäß (1) enthalten ist, bevorzugt im Bereich von 5 bis 60 Vol.-% bezogen auf das Gesamtvolumen liegt, bevorzugt von 10 bis 55 Vol.-%, weiter bevorzugt von 20 bis 50 Vol.-%, und weiter bevorzugt von 30 bis 45 Vol.-%.

Gemäß besonders bevorzugten Ausführungsformen des erfindungsgemäßen Verfahrens zur Umwandlung von Oxygenaten zu Olefinen stammt der in (1) bereitgestellte Gasstrom aus einer Vorreaktion, bevorzugt aus der Umwandlung von einem oder mehreren Alkoholen zu einem oder mehreren Ethern, insbesondere aus der Umwandlung von einem oder mehreren Alkoholen ausgewählt aus der Gruppe bestehend aus Methanol, Ethanol, n-Propanol, Isopropanol und Mischungen von zwei oder mehr davon, weiter bevorzugt aus der Gruppe bestehend aus Methanol, Ethanol, n-Propanol und Mischungen von zwei oder mehr davon, wobei besonders bevorzugt der in (1) bereitgestellte Gasstrom einer Vorreaktion von Methanol und/oder Ethanol entstammt und weiter bevorzugt Methanol zumindest teilweise zu einem oder mehreren Di-(C₁-C₂)alkylethern umgesetzt wird, bevorzugt zu einem oder mehreren Di-(C₁-C₂)alkylethern ausgewählt aus der Gruppe bestehend aus Dimethylether, Diethylether, Ethylmethylether und Mischungen von zwei oder mehr davon. So entstammt der in (1) bereitgestellte Gasstrom gemäß einer besonders bevorzugten Ausführungsform einer Vorreaktion der Umwandlung von Methanol zu Dimethylether.

Bei den besonders bevorzugten Ausführungsformen des erfindungsgemäßen Verfahrens, bei welchen der in (1) bereitgestellte Gasstrom einer Vorreaktion von einem oder mehreren Alkoholen entstammt, besteht prinzipiell keinerlei besondere Einschränkung hinsichtlich der Reaktion und damit des Reaktionsprodukts der Umwandlung von einem oder mehreren Alkoholen, vorausgesetzt diese führt zu einem Gasstrom enthaltend ein oder mehrere Oxygenate, welche bei Inkontaktbringen in (2) mit einem Katalysator gemäß der vorliegenden Erfindung die Umwandlung mindestens eines der Oxygenate zu mindestens einem Olefin ermöglichen. Gemäß diesen besonderen Ausführungsformen ist es weiter bevorzugt, dass die Vorreaktion zur Umwandlung mindestens eines Alkohols zu mindestens einem Ether und insbesondere zu mindestens einem Dialkylether führt, wobei es sich bei der Vorreaktion besonders bevorzugt um eine Dehydratisierung handelt, bei welcher Wasser als Kuppelprodukt zu einem oder mehreren Dialkylethern anfällt. Gemäß den besonderen und bevorzugten Ausführungsformen der vorliegenden Erfindung, bei welchen der in (1) bereitgestellte Gasstrom einer Vorreaktion entstammt, ist es gemäß dem erfindungsgemäßen Verfahren besonders bevorzugt, dass ein solcher einer Vorreaktion entstammender Gasstrom direkt und ohne Aufarbeitung dem erfindungsgemäßen Verfahren in Schritt (1) zugeführt wird.

Hinsichtlich der Art und Weise des Inkontaktbringens des Gasstroms mit einem Katalysator gemäß vorliegender Erfindung in Schritt (2) des erfindungsgemäßen Verfahrens zur Umwandlung von Oxygenaten zu Olefinen besteht prinzipiell keinerlei Einschränkung, sofern die Umwandlung von mindestens einem Oxygenat zu mindestens einem Olefin realisiert werden kann. Dies gilt beispielsweise für die Temperatur, bei welcher das Inkontaktbringen (2) stattfindet. Somit kann beispielsweise das Inkontaktbringen in Schritt (2) des erfindungsgemäßen Verfahrens bei einer Temperatur im Bereich von 200 bis 700 °C stattfinden, wobei bevorzugt Temperaturen im Bereich von 250 bis 650 °C, weiter bevorzugt von 300 bis 600 °C, weiter bevorzugt von 350 bis 560 °C, weiter bevorzugt von 400 bis 540 °C und weiter bevorzugt von 430 bis 520 °C gewählt werden. Gemäß besonders bevorzugten Ausführungsformen der vorliegenden Erfindung wird das Inkontaktbringen gemäß (2) des erfindungsgemäßen Verfahrens bei einer Temperatur im Bereich von 450 bis 500 °C durchgeführt.

Somit werden gemäß der vorliegenden Erfindung Ausführungsformen des Verfahrens zur Umwandlung von Oxygenaten zu Olefinen bevorzugt, bei welchen das Inkontaktbringen gemäß (2) bei einer Temperatur im Bereich von 200 bis 700°C, bevorzugt von 250 bis 650°C, weiter bevorzugt von 300 bis 600°C, weiter bevorzugt von 350 bis 560°C, weiter bevorzugt von 400 bis 540°C, weiter bevorzugt von 430 bis 520°C, und weiter bevorzugt von 450 bis 500°C erfolgt.

Gleiches gilt entsprechend für den Druck, bei welchem der Gasstrom in Schritt (2) des erfindungsgemäßen Verfahrens mit dem Katalysator gemäß vorliegender Erfindung in Kontakt gebracht wird. Somit kann das Inkontaktbringen prinzipiell bei jedem beliebigen Druck stattfinden, vorausgesetzt, dieser erlaubt die Umwandlung von mindestens einem Oxygenat zu mindestens einem Olefin durch das Inkontaktbringen des Gasstroms mit dem Katalysator. Somit kann der Druck beispielsweise beim Inkontaktbringen in Schritt (2) im Bereich von 0,1 bis 10 bar liegen, wobei der Druck gemäß vorliegender Anmeldung den absoluten Druck kennzeichnet, so dass ein Druck von 1 bar beim Inkontaktbringen entsprechend dem Normaldruck von 1,03 kPa entspricht. Gemäß vorliegender Erfindung findet das Inkontaktbringen in Schritt (2) bevorzugt bei einem Druck von 0,3 bis 7 bar, weiter bevorzugt von 0,5 bis 5 bar, weiter bevorzugt von 0,7 bis 3 bar, weiter bevorzugt von 0,8 bis 2,5 bar und weiter bevorzugt von 0,9 bis 2,2 bar statt. Gemäß besonders bevorzugten Ausführungsformen des erfindungsgemäßen Verfahrens zur Umwandlung von Oxygenaten zu Olefinen findet das Inkontaktbringen in Schritt (2) bei einem Druck von 1 bis 2 bar statt.

Somit werden gemäß der vorliegenden Erfindung Ausführungsformen des Verfahrens zur Umwandlung von Oxygenaten zu Olefinen bevorzugt, bei welchen das Inkontaktbringen gemäß (2) bei einem Druck im Bereich von 0,1 bis 10 bar, bevorzugt von 0,3 bis 7 bar, weiter bevorzugt von 0,5 bis 5 bar, weiter bevorzugt von 0,7 bis 3 bar, weiter bevorzugt von 0,8 bis 2,5 bar, weiter bevorzugt von 0,9 bis 2,2 bar, und weiter bevorzugt von 1 bis 2 bar erfolgt.

Weiterhin bestehen keine besonderen Einschränkungen hinsichtlich der Art der Durchführung des erfindungsgemäßen Verfahrens zur Umwandlung von Oxygenaten zu Olefinen, so dass sowohl ein kontinuierliches als auch ein nichtkontinuierliches Verfahren verwendet werden kann, wobei das nichtkontinuierliche Verfahren beispielsweise in Form eines Batch-Verfahrens durchgeführt werden kann. Gemäß vorliegender Erfindung ist es jedoch bevorzugt, das erfindungsgemäße Verfahren für die Umwandlung von Oxygenaten als kontinuierliches Verfahren zu führen. Somit werden gemäß der vorliegenden Erfindung Ausführungsformen des Verfahrens zur Umwandlung von Oxygenaten zu Olefinen bevorzugt, bei welchen das Verfahren ein kontinuierliches Verfahren ist.

Hinsichtlich dieser bevorzugten Ausführungsformen eines kontinuierlichen Verfahrens bestehen keinerlei Einschränkungen hinsichtlich der gewählten Raumgeschwindigkeit, vorausgesetzt die Umwandlung von einem Oxygenat zu einem Olefin kann erfolgen. Somit können beispielsweise Raumgeschwindigkeiten (WHSV = weight hourly space velocity wird als Verhältnis von Oxygenat-Eduktstrom in kg/h zur Menge von Zeolith im Reaktor in kg errechnet) beim Inkontaktbringen in Schritt (2) gewählt werden, welche im Bereich von 0,5 bis 50 h⁻¹liegen, wobei bevorzugt Raumgeschwindigkeiten von 1 bis 30 h⁻¹ gewählt werden, weiter bevorzugt von 2 bis 20 h⁻¹, weiter bevorzugt von 3 bis 15 h⁻¹ und weiter bevorzugt von 4 bis 10 h⁻¹. Gemäß besonders bevorzugten Ausführungsformen des erfindungsgemäßen Verfahrens zur Umwandlung von Oxygenaten werden Raumgeschwindigkeiten für das Inkontaktbringen des Gasstroms in Schritt (2) im Bereich von 5 bis 7 h⁻¹ gewählt.

Bezüglich der bevorzugten Raumgeschwindigkeiten gemäß den besonderen Ausführungsformen des erfindungsgemäßen Verfahrens zur Umwandlung von Oxygenaten zu Olefinen werden diese bevorzugt im Zusammenhang mit einem Umsatz an Oxygenaten eingestellt, welcher sich in einem bestimmten Bereich befindet. Somit können die Raumgeschwindigkeiten gemäß den besonderen und bevorzugten Ausführungsformen des erfindungsgemäßen Verfahrens bei einem Umsatz an Oxygenat eingestellt werden, welcher sich im Bereich von beispielsweise 50 bis 99,9 % befindet. Gemäß vorliegender Erfindung wird die Raumgeschwindigkeit gemäß den besonderen und bevorzugten Ausführungsformen jedoch bevorzugt bei einem Umsatz an Oxygenaten im Bereich von 70 bis 99,5 % eingestellt, weiter bevorzugt von 90 bis 99 %, weiter bevorzugt von 95 bis 98,5 %, weiter bevorzugt von 96 bis 98 % und weiter bevorzugt 96,5 bis 97,5 %. Gemäß vorliegender Erfindung ist es jedoch weiter bevorzugt, dass die Raumgeschwindigkeit beim Inkontaktbringen des Gasstroms in Schritt (2) des erfindungsgemäßen Verfahrens bei einem Vollumsatz von 96,5 bis 99,9 % oder mehr des Oxygenats eingestellt wird, weiter bevorzugt von 97,5 bis 99,9 % oder mehr, weiter bevorzugt von 98 bis 99,9 % oder mehr, weiter bevorzugt von 99 bis 99,9 % oder mehr und weiter bevorzugt von 99,5 bis 99,9 % oder mehr Umsatz an Oxygenaten.

Somit werden gemäß der vorliegenden Erfindung Ausführungsformen des Verfahrens zur Umwandlung von Oxygenaten zu Olefinen bevorzugt, bei welchen die Raumgeschwindigkeit beim Inkontaktbringen gemäß (2) im Bereich von 0,5 bis 50 h⁻¹, bevorzugt von 1 bis 30 h⁻¹, weiter bevorzugt von 2 bis 20 h⁻¹, weiter bevorzugt von 3 bis 15 h⁻¹, weiter bevorzugt von 4 bis 10 h⁻¹, und weiter bevorzugt von 5 bis 7 h⁻¹ liegt.

Wie weiter oben beschrieben und in den Beispielen der vorliegenden Anmeldung gezeigt, können bei einem wie in der vorliegenden Anmeldung beschriebenen Verfahren zur Umwandlung von Oxygenaten besonders hohe Standzeiten mit dem erfindungsgemäßen Katalysator erzielt werden, insbesondere hinsichtlich der besonderen und bevorzugten Ausführungsformen des erfindungsgemäßen Verfahrens. So wurde überraschenderweise festgestellt, dass durch die Verwendung eines Katalysators gemäß der vorliegenden Erfindung die Standzeit des Katalysators, bis zu welcher das Verfahren zur Regenerierung des Katalysators unterbrochen werden muss, zumindest hinsichtlich der Verwendung dieser Katalysatorcharge gegenüber der Verwendung von Katalysatoren gemäß dem Stand der Technik erheblich erhöht werden kann. So ist es gemäß vorliegender Erfindung besonders bevorzugt, für die Durchführung des Verfahrens zur Umwandlung von Oxygenaten zu Olefinen bei einer der besonderen oder bevorzugten Raumgeschwindigkeiten, wie in der vorliegenden Anmeldung beschrieben, hohe Standzeiten zu wählen.

Somit werden Standzeiten bevorzugt, welche im Bereich von 40 bis 300 h liegen, weiter bevorzugt im Bereich von 50 bis 250 h, weiter bevorzugt von 70 bis 200 h, weiter bevorzugt von 90 bis 150 h, weiter bevorzugt von 100 bis 130 h und weiter bevorzugt von 110 bis 115 h. Insbesondere, bezogen auf die besonderen und bevorzugten Raumgeschwindigkeiten, bei welchen das erfindungsgemäßen Verfahren durchgeführt wird, werden somit beispielsweise Standzeiten von 40 bis 300 h bei einer Raumgeschwindigkeit im Bereich von 0,5 bis 50 h⁻¹ bevorzugt. Weiter bevorzugt ist eine Standzeit von 50 bis 250 h bei einer Raumgeschwindigkeit von 1 bis 30 h⁻¹, weiter bevorzugt eine Standzeit von 70 bis 200 h bei einer Raumgeschwindigkeit im Bereich von 2 bis 20 h⁻¹, weiter bevorzugt eine Standzeit von 90 bis 150 h bei einer Raumgeschwindigkeit im Bereich von 3 bis 15 h⁻¹ und weiter bevorzugt von 100 bis 130 h bei einer Raumgeschwindigkeit von 4 bis 10 h⁻¹. Gemäß einer besonders bevorzugten Ausführungsform des erfindungsgemäßen Verfahrens wird eine Standzeit des Katalysators gewählt, während der das kontinuierliche Verfahren ohne Unterbrechung durchgeführt wird, welche im Bereich von 110 bis 115 h bei einer Raumgeschwindigkeit von 5 bis 7 h⁻¹ liegt. Wie bereits weiter oben hinsichtlich der besonderen und bevorzugten Raumgeschwindigkeiten, welche im erfindungsgemäßen Verfahren gewählt werden, beziehen sich die besonderen und bevorzugten Ausführungsformen hinsichtlich der gewählten Standzeit und insbesondere der gewählten Standzeiten in Kombination mit bestimmten Raumgeschwindigkeiten auf einen gleichzeitigen Vollumsatz des Katalysators und insbesondere auf Umsätze im Bereich von 96,5 bis 99,9 % oder mehr, bevorzugt von 97,5 bis 99,9 % oder mehr, weiter bevorzugt von 98 bis 99,9 % oder mehr, weiter bevorzugt von 99 bis 99,9 % oder mehr und weiter bevorzugt von 99,5 bis 99,9 % oder mehr hinsichtlich des Umsatzes des einen oder der mehreren Oxygenate, welche im Gasstrom gemäß (1) des erfindungsgemäßen Verfahrens enthalten sind.

Somit werden gemäß der vorliegenden Erfindung Ausführungsformen des Verfahrens zur Umwandlung von Oxygenaten zu Olefinen weiter bevorzugt, bei welchen die Standzeit des Katalysators, während der das kontinuierlichen Verfahren ohne Unterbrechung durchgeführt wird, im Bereich von 40 bis 300 h, bevorzugt von 50 bis 250 h, weiter bevorzugt von 70 bis 200 h, weiter bevorzugt von 90 bis 150 h, weiter bevorzugt von 100 bis 130 h, und weiter bevorzugt von 110 bis 115 h liegt.

Weiterhin betrifft die vorliegende Erfindung auch die Verwendung des erfindungsgemäßen Katalysators wie oben beschrieben, und insbesondere die Verwendung des erfindungsgemäßen Katalysators gemäß den besonderen und bevorzugten Ausführungsformen wie in der vorliegenden Anmeldung beschrieben. Gemäß vorliegender Erfindung besteht prinzipiell keinerlei Beschränkung hinsichtlich der Verwendung des erfindungsgemäßen Katalysators, so dass dieser sowohl für die Umwandlung von Oxygenaten zu Olefinen als auch in jedem denkbaren katalytischen Verfahren zum Einsatz kommen kann, in welchem der Katalysator eine entsprechende katalytische Wirkung hinsichtlich einer chemischen Umsetzung zeigt. Gemäß vorliegender Erfindung wird der erfindungsgemäße Katalysator jedoch bevorzugt in einem Methanol-zu-Olefin-Verfahren (MTO-Verfahren) eingesetzt sowie weiterhin bevorzugt in einem Methanol-zu-Benzin-Verfahren (MTG-Verfahren), in einem Methanol-zu-Kohlenwasserstoff-Verfahren, in einem Methanol-zu-Propylen-Verfahren (MTP-Verfahren), in einem Methanol-zu-Propylen/Butylen-Verfahren (MT3/4-Verfahren) sowie zur Alkylierung von Aromaten oder in einem Fluid-Catalytic-Cracking-Verfahren (FCC-Verfahren). Gemäß vorliegender Erfindung wird der erfindungsgemäßen Katalysator jedoch besonders bevorzugt in einem Methanol-zu-Olefin-Verfahren (MTO-Verfahren) verwendet, insbesondere in einem Verfahren zur Umwandlung von Oxygenaten zu Olefinen gemäß einem der besonderen oder bevorzugten Verfahren zur Umwandlung von Oxygenaten zu Olefinen gemäß vorliegender Erfindung.

### BESCHREIBUNG DER FIGUREN

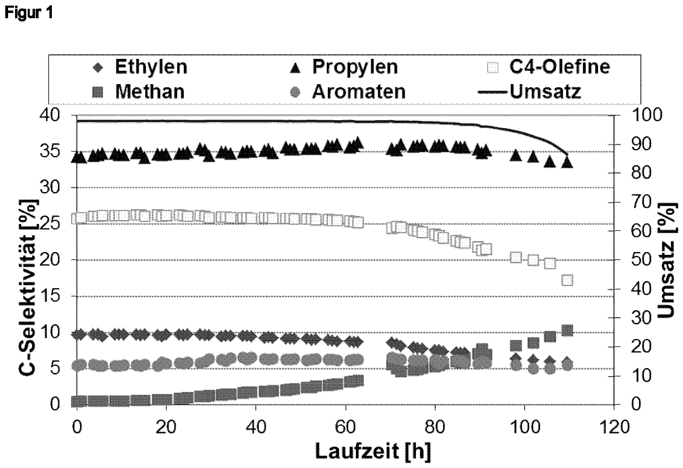

- Figur 1: zeigt den Methanol-Umsatz sowie die jeweilige Ethylen-, Propylen, C₄-Olefin-, C₄-Paraffin- und Methan-Selektivitäten des Katalysators gemäß Beispiel 1 im MTO-Versuch gemäß Beispiel 3 in Abhängigkeit von der Laufzeit. Dabei steht die Abzissenachse für die Standzeit in Stunden, die linke Ordinatenachse für die Selektivität in % an Ethylen (Meßpunkte: "◆"), Propylen (Meßpunkte: "▲") , C₄-Olefin (Meßpunkte: "□"), Aromaten (Meßpunkte: "●"), und Methan (Meßpunkte: "■"), und die rechte Ordinatenachse für den Methanol- beziehungsweise für den Dimethyletherumsatz in % welcher in der Graphik als durchgezogene Linie dargestellt ist.

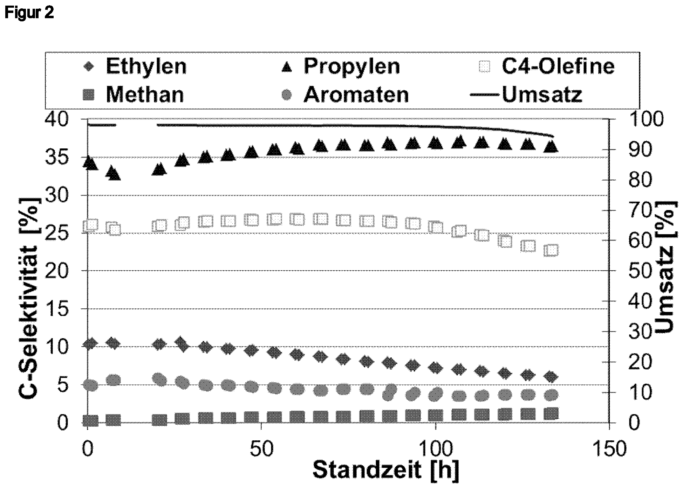

- Figur 2: zeigt den Methanol-Umsatz sowie die jeweilige Ethylen-, Propylen, C₄-Olefin-, C₄-Paraffin- und Methan-Selektivitäten des Katalysators gemäß Beispiel 1 im MTO-Versuch gemäß Beispiel 3 in Abhängigkeit von der Laufzeit. Dabei steht die Abzissenachse für die Standzeit in Stunden, die linke Ordinatenachse für die Selektivitäten in % an Ethylen (Meßpunkte: "◆"), Propylen (Meßpunkte: "▲") , C₄-Olefin (Meßpunkte: "□"), Aromaten (Meßpunkte: "●"), und Methan (Meßpunkte: "■"), und die rechte Ordinatenachse für den Methanol- beziehungsweise für den Dimethyletherumsatz in %, welcher in der Graphik als durchgezogene Linie dargestellt ist

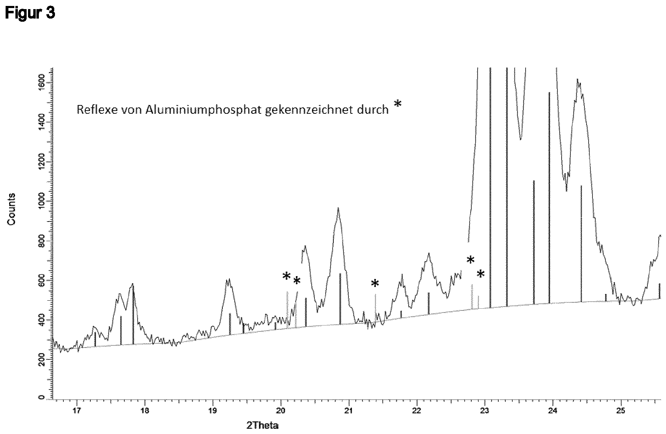

- Figur 3: zeigt ein Ausschnitt aus dem Röntgendiffraktogramm des Extrudats aus Besipiel 1, welches mit einer Wellenlänge von 1,54060 Å gemessen wurde. Dabei steht die Abzissenachse für die Reflexionswinkel "2Theta" in ° 2Theta, und die Ordinatenachse für die gemessene Instensität in der dimensionslose Einheit "counts". Zu Vergleichszwecken sind die Linienspektren von ZSM-5 sowie von Aluminiumphosphat (AlPO₄) in dem Diffraktogramm eingezeichnet, wobei die Linien von Aluminiumphosphat mit einem "*" gekennzeichnet sind. Insbesondere ist dem Röntgendiffraktogramm zu entnehmen, dass kein AlPO₄ in der Probe vorliegt.

### BEISPIELE

### Vergleichsbeispiel 1: Herstellen eines Extrudats enthaltend ZSM-5

150 g H-ZSM-5 (ZEO-cat PZ2-100 H von der Fa. Zeochem) mit Si/Al = 50 wurden mit 130 g Pseudoböhmit (Pural SB; Sasol) vermischt, mit 3,9 g Ameisensäure versetzt und mit 135 g Wasser im Kneter zu einer homogenen Masse verarbeitet. Die Einwaagen wurden dabei so gewählt, dass das Zeolith/Binder-Verhältnis im kalzinierten Extrudate 60:40 entspricht. Diese Knetmasse wurde mit Hilfe einer Strangpresse mit ca. 90-130 bar durch eine 2,5 mm Matrize geschoben. Die Stränge wurden anschießend 16 h bei 120°C im Trockenschrank getrocknet und (nach 4 h Aufheizzeit) 4 h bei 500°C im Muffelofen kalziniert. Danach wurden die Stränge in einer Siebmaschine mit 2 Stahlkugeln (Durchmesser ca. 2 cm, 258 g/Kugel) zu 1,6-2,0 mm Splitt verarbeitet.

Die BET-Oberfläche des erhaltenen Splitts betrug 351 m²/g.

**Elementaranalyse:**

| | |
|---|---|
| Si: | 25,9 g/100 g |
| AI: | 19,7 g/100 g |

### Vergleichsbeispiel 2: Herstellen eines mit Phosphor behandelten Extrudats enthaltend ZSM-5

Vor der Phosphortränkung wurde die Wasseraufnahmefähigkeit des H-ZSM-5/Al₂O₃-Splitts aus Vergleichsbeispiel 1 bestimmt zu 1 ml H₂O/2 g Extrudat. Dementsprechend wurde eine Lösung aus 3,1 g 85%iger Phosphorsäure mit dest. Wasser auf 10 ml Gesamtflüssigkeit aufgefüllt. Die Menge der Phosphorsäure wurde so berechnet, dass sich nach der Kalzination 4 Gew.-% Phosphor als Element berechnet auf dem Extrudat befinden. 20 g Splitt aus Vergleichsbeispiel 1 wurden in einer Porzellanschale vorgelegt und mit der verdünnten Phosphorsäure mit einem Spatel homogenisiert. Das homogenisierte Gemisch wurde 8 h bei 80°C im Vakuumtrockenschrank getrocknet und anschließend (nach 4 h Aufheizzeit) für 4 h bei 500°C im Muffelofen unter Luft kalziniert.

Die BET-Oberfläche des erhaltenen mit Phosphor imprägnierten Splitts betrug 283 m²/g.

**Elementaranalyse:**

| | |
|---|---|
| Si: | 22,8 g/100 g |
| Al: | 17,6 g/100 g |
| P: | 3,7 g/100 g |

### Vergleichsbeispiel 3: Herstellen eines Extrudats enthaltend Mg-ZSM-5

H-ZSM-5 (ZEO-cat PZ2-100 H von der Fa. Zeochem) mit Si/Al = 50 Pulver wurde mit einer Magnesiumnitratlösung sprühgetränkt. Bei dieser Sprühtränkung wird anders als bei einer Schalentränkung (Vergleichsbeispiel 2) auf 90% der Wasseraufnahme gesprüht. Die Menge Mg wurde so eingewogen, dass das Pulver nach der Kalzination 4 Gew.-% Mg enthält. Zur Tränkung wurden 58,7 g Zeolithpulver in einen Rundkolben gefüllt und in einen Rotationsverdampfer vorgelegt. 43,9 g Magnesiumnitrat wurden in Wasser unter Erwärmung gelöst, und mit dest. Wasser auf 54 ml Gesamtflüssigkeit aufgefüllt. Die erhaltene Magnesiumnitratlösung wurde in einen Tropftrichter eingefüllt, und über eine mit 100 l/h N₂ gefluteten Glassprühdüse langsam auf das Pulver unter Rotieren gesprüht. In regelmäßigen Abständen wurde währenddessen der Kolben abgehängt und von Hand geschüttelt, um eine gleichmäßige Verteilung zu erreichen. Nach abgeschlossener Zugabe der Magnesiumnitratlösung wurde das Pulver 10 min. weiter rotiert. Anschließend wurde das Pulver 16 h bei 120°C im Quarzdrehkugelkolben getrocknet, nach 4 h Aufheizzeit wurde das Pulver dann 4 h bei 500°C unter Luft (20 L/h) kalziniert, und anschließend das kalzinierte Pulver mit Hilfe einer Analysenmühle klein gemahlen und durch einen Sieb mit einer Maschenweite von 1 mm gesiebt.

Die BET-Oberfläche des erhaltenen mit Magnesium imprägnierten Zeoliths betrug BET 303 m²/g.

**Elementaranalyse:**

| | |
|---|---|
| Mg: | 3,7 g/100g |

Das durch Sprühtränkung hergestellte Mg-ZSM-5 Pulver wurde mit Pseudoböhmit (Pural SB; Sasol) als Binder zu Strängen weiter verarbeitet. Die Einwaagen wurden dabei so gewählt, dass das Zeolith/Binder-Verhältnis im kalzinierten Extrudat 60:40 entspricht. Dazu wurden 58,7 g Zeolith und 50,7 g Pseudoböhmit (Pural SB; Sasol) eingewogen, vermischt, mit verdünnter Ameisensäure versetzt (1,5 g Ameisensäure in 20 ml Wasser) und mit 38 ml Wasser zu einer homogenen Masse verarbeitet. Die mit einem Curd-Meter ("Curd Meter max ME-500" (Firma K.K. Itec Techno Engineering) gemessene Viskosität des homogenisierten Gemischs betrug 1,633 x 10⁴ N/m². Die Knetmasse wurde mit Hilfe einer Strangpresse durch eine 2,5 mm Matrize mit ca. 110 bar gepresst. Anschließend wurden die erhaltenen Stränge 16 h bei 120°C im Trockenschrank getrocknet, (nach 4 h Aufheizzeit) 4 h bei 500°C im Muffelofen kalziniert und die kalzinierten Stränge in einer Siebmaschine mit 2 Stahlkugeln (Durchmesser ca. 2 cm, 258 g/Kugel) zu 1,6-2 mm Splitt verarbeitet.

Die BET-Oberfläche des erhaltenen Splitts betrug 291 m²/g.

**Elementaranalyse:**

| | |
|---|---|
| Si: | 24,5 g/100g |
| Al: | 19,0 g/100g |
| Mg: | 2,3 g/100g |
| Na: | 0,04 g/100g |

### Beispiel 1: Herstellen eines mit Phosphor behandelten Extrudats enthaltend Mg-ZSM-5

Gemäß der Herstellungsvorschrift von Vergleichsbeispiel 2 wurden 10 g des Mg-ZSM-5/Al₂O₃-Splitt aus Vergleichsbeispiel 3 mit einer wässrigen Phosphorsäurelösung (1,6 g 85%ige H₃PO₄ mit H₂O auf 5 ml aufgefüllt) getränkt, getrocknet und kalziniert.

Die BET-Oberfläche des erhaltenen mit Phosphor imprägnierten Splitts betrug 189 m²/g.

**Elementaranalyse:**

| | |
|---|---|
| Si: | 22,0 g/100g |
| Al: | 17,8 g/100g |
| Mg: | 2,1 g/100g |
| Na: | 0,03 g/100g |
| P: | 3,8 g/100g |

Die Verteilung des Phosphors in dem Extrudat wurde durch Analytische Elektronenmikroskopie (EDXS) analysiert. Hierbei ergab sich überraschenderweise, dass die Phosphor-Konzentration in dem Binder ca. 9 Gew.-% betrug, während im zeolithischen Material eine Phosphor-Konzentration von nur ca. 1 Gew.-% gemessen wurde. Somit wurde überraschenderweise festgestellt dass ein nach der vorliegenden Erfindung hergestelltes Extrudat eine wesentlich höhere Phosphorkonzentration in der Binder-Matrix aufweist als im darin enthaltenen zeolithischen Material, obwohl eine Imprägnierung des Extrudats erfolgt, welche eine gleichmäßige Verteilung des Phosphors sowohl in der Binder-Matrix als auch im zeolithischen Material erwarten lassen würde.

Das Extrudat wurde auch durch Röntgenpulverdiffraktometrie untersucht. In Figur 3 ist ein Ausschnitt des Röntgendiffraktogramms einer Probe des Extrudats gezeigt, in welchem die Reflexe des zeolitischen Materials ZSM-5 welches vom MFI-Strukturtyp ist gut zu erkennen sind, wie ein Vergleich mit dem Linienspektrum von ZSM-5 zeigt, welches zusätzlich im Röntgendiffraktogramm eingezeichnet wurde. Dagegen ist dem Diffraktogramm eindeutig zu entnehmen, dass kein AlPO₄ in der Probe vorliegt (siehe mit "*" gekennzeichnete Linien in Figur 3). Somit konnte insbesondere festgestellt werden, dass kein Aluminiumphosphat entsteht beim Kalzinieren des Phosphor-imprägnierten Aluminiumoxid Binders während des Herstellungsverfahrens.

### Beispiel 2: Herstellen eines Extrudats mit Mg-ZSM-5 und Phosphorsäure

Durch Sprühtränkung hergestellte Mg-ZSM-5 Pulver aus Vergleichsbeispiel 3 wurde mit Pseudoböhmit (Pural SB; Sasol) als Binder zu Strängen weiter verarbeitet. Die Einwaagen wurden dabei so gewählt, dass das Zeolith/Binder Verhältnis im kalzinierten Extrudat 60:40 entspricht. Dazu wurden 115 g Zeolith und 105 g Pseudoböhmit (Pural SB; Sasol) eingewogen, vermischt, mit 15,2 g Phosphorsäure (85%ig; Sigma-Aldrich) versetzt und mit 5,75 g Walocel und 130 ml Wasser zu einer homogenen Masse verarbeitet. Die Knetmasse wurde mit Hilfe einer Strangpresse durch eine 2,5 mm Matrize mit ca. 60 bar gepresst. Anschließend wurden diese Stränge 16 h bei 120°C im Trockenschrank getrocknet, 4 h bei 500°C (4 h Aufheizzeit) im Muffelofen kalziniert und in einer Siebmaschine mit 2 Stahlkugeln (Durchmesser ca. 2 cm, 258 g/Kugel) zu 1,6-2 mm Splitt verarbeitet.

Die BET-Oberfläche des erhaltenen Splitts betrug 265 m²/g.

**Elementaranalyse:**

| | |
|---|---|
| Si: | 22,9 g/100g |
| Al: | 19,9 g/100g |
| Mg: | 2,1 g/100g |
| P: | 1,8 g/100g |

### Beispiel 3: Vergleichsversuche im Methanol-zu-Propylen/Butylen-Verfahren (MT3/4-Verfahren)

Die in den Vergleichsbeispielen 1 bis 3 sowie in den Biespielen 1 und 2 hergestellten Katalysatoren (jeweils 2 g) wurden mit Siliziumcarbid (jeweils 23 g) vermischt und in einem kontinuierlich betriebenen, elektrisch beheizten Rohrreaktor eingebaut. Vor dem Testreaktor wurde Methanoldampf erzeugt zu einem Gasstrom enthaltend 75 Vol.-% Methanol und 25 Vol.-% N₂ welcher durch einen mit 34 mL Aluminiumoxid-Splitt beladenen Vorreaktor bei 275°C und einem (absoluten) Druck von 1-2 bar zu Dimethylether umgesetzt wurde. Der Dimethylether enthaltende Strom wurde dann in den Rohrreaktor geleitet, und dort bei einer Temperatur von 450 bis 500°C, einer Belastung (WHSV = weight hourly space velocity) von 6 h⁻¹ bezogen auf Methanol sowie bei einem (absoluten) Druck von 1 bis 2 bar umgesetzt, wobei die Reaktionsparameter während der gesamten Laufzeit gehalten wurden. Nach dem Rohrreaktor wurde das gasförmige Produkt-Gemisch on-line chromatographisch analysiert.

Die im MT3/4-Verfahren für die Katalyatoren gemäß den Vergleichsbeispielen 1 bis 3 sowie gemäß den Beispielen 1 und 2 erzielten Ergebnisse hinsichtlich der Selektivitäten sind in Tablle 1 dargestellt, wobei diese die Durchschnittsselektivitäten während der Laufzeit des Katalysators wiedergeben, bei welcher der Umsatz von Methanol 97% oder mehr betrug. Die Ergebnisse der on-line chromatographischen Analyse des Vergleichsbeispiels 3 sowie von Beispiel 1 sind in Figuren 1 und 2 jeweils abgebildet.

**Tabelle 1: Durchschnittsselektivitäten bei einem Methanol-Umsatz von >97%.**

| | Vergleichsbsp. 1 | Vergleichsbsp. 2 | Vergleichsbsp. 3 | Bsp. 1 | Bsp.2 |
|---|---|---|---|---|---|
| Standzeit [h] | 33 | 23 | 85 | 113 | 200 |
| WHSV [h⁻¹] | 6 | 6 | 6 | 6 | 6 |

| Selektivität [%]: | | | | | |
|---|---|---|---|---|---|
| Ethylen | 9 | 10 | 9 | 9 | 7 |
| Propylen | 23 | 25 | 35 | 36 | 38 |
| Butylen | 15 | 15 | 25 | 26 | 28 |
| C₄-Paraffine | 9 | 8 | 3 | 3 | 3 |
| C₅₊ (Gemisch) | 19 | 19 | 18 | 19 | 17 |
| Aromaten | 17 | 15 | 6 | 5 | 5 |
| Ethan, Propan | 5 | 6 | 2 | 1 | 1 |
| Methan | 2 | 1 | 2 | 1 | 1 |

Wie den Werten in Tabelle 1 entnommen werden kann, wurde überraschenderweise festgestellt, dass die spezielle Verwendung einer Kombination eines Phosphor enthaltenden Metalloxids mit einem Erdalkalimetall enthaltenden Zeolith zu einer überraschend langen Standzeit des Katalysators führt, bei welchem ein Umsatz an Methanol von über 97% aufrechterhalten werden kann. Wie ein Vergleich der Katalysatoren mit und ohne Phosphor aus den Vergleichsbeispiele 1 und 2 zeigt, ist die Standzeit des Katalysators mit Phosphor aus Vergleichsbeispiel 2 wesentlich verringert gegenüber dem Katalysator aus Vergleichsbeispiel 1 ohne Phosphor, während in den erfindungsgemäßen Katalysatoren gemäß den Beispielen 1 und 2 die Verwendung von Phosphor ganz wider Erwarten zu einer wesentlichen Verbesserung der Standzeit des Katalysators führt, wie ein Vergleich der Ergebnisse für die erfindungsgemäßen Katalysatoren aus den Beispielen 1 und 2 mit dem Katalysator aus Vergleichsbeispiel 3 zeigt, welcher ohne Phosphor hergestellt wurde. Darüber hinaus wurde überraschenderweise gefunden, das der erfindungsgemäße Katalysator auch eine Steigerung der Selektivität hin zu den C₃- und C₄-Olefine Propylen und Butylen bewirkt im Vergleich zu den Vergleichsbeispielen ohne Erdalkalimetall und/oder ohne Phosphor. Aufgrund der zuvor genannten überraschenden Effekte des Katalysators gemäß der vorliegenden Erfindung aus Beispielen 1 und 2 war es umso mehr unerwartet dass dieser auch eine erhebliche Verringerung der unerwünschten Nebenprodukte und insbesondere von Methan im MT3/4-Verfahren bewirkt. Dieser überraschende Effekt ist insbesondere durch einen Vergleich der Ergebnisse der on-line chromatographischen Analyse des Vergleichsbeispiels 3 sowie von Beispiel 1 sind in Figuren 1 und 2 gut zu erkennen. So ist eine stetige und starke Zunahme im Verlauf der Entwicklung von Methan als Nebenprodukt bei Vergleichsbeispiel 3 in Figur 1 zu erkennen mit zunehmender Laufzeit, während die Zunahme der Methanbildung während der gesamten Laufzeit des Katalysators von Beispiel 1 im Vergleich hierzu nur äußerst schwach ist (siehe Figur 2).

Darüber hinaus wurde überraschender Weise festgestellt, dass der erfindungsgemäße Katalysator gemäß Beispiel 2 bei dessen Herstellung Phosphor in Form von Phosphorsäure zur Verstrangung des Zeoliths sowie des Bindemittels eingebracht wurde, eine erheblich Steigerung der Standzeit gegenüber dem Katalysator gemäß Beispiel 1 zeigen konnte, sowie eine weitere Verbesserung der Selektivität gegenüber C₃- und C₄-Olefine. Diese weiteren Verbesserungen sind umso vorteilhafter als die Herstellung des Katalysators nach einem vereinfachten Verfahren erfolgt, nach welchem eine zusätzliche Imprägnierung des fertigen Extrudats mit einer Phosphor enthaltenden Lösung wie in Beispiel 1 entfällt. Somit wird neben einem hocheffizienten Katalysator auch eine besonders effiziente Herstellung durch das in Beispiel 2 beschriebene Verfahren bereitgestellt.

Basierend auf diesen unerwarteten Effekten welche durch die unerwarteten Synergie der Dotierung mit Erdalkalimetall sowie mit Phosphor gemäß vorliegender Erfindung bewirkt werden können wird somit ein Katalysator für die Umwandlung von Oxygenaten zu Olefinen bereitgestellt welcher, wie anhand der Testergebnisse im MT3/4-Verfahren gemäß Beispiel 3 gezeigt werden konnte, nicht nur wesentlich längere Standzeiten ermöglicht, sondern auch eine Steigerung der Selektivität gegenüber C₃- und C₄-Olefine zeigt und insbesondere auch eine erhebliche Verminderung der Nebenproduktbildung ermöglicht, insbesondere von Methan.

### Zitierte Dokumente des Standes der Technik

- DD 238733 A1
- Mclntosh et al. in Applied Catalysis 1983, 6, S. 307-314
- Lee et al. in Applied Catalysis A 2010, 374, S. 18-25
- Freiding et al. in Applied Catalysis A 2007, 328, S. 210-218
- US 4,049,573
- Goryainova et al. in Petroleum Chemistry 2011, Bd. 51, Nr. 3, S. 169-173
- Ciambelli et al. "Acid-base catalysis in the conversion of methanol to olefins over Mgmodified ZSM-5 zeolite", Successful Design of Catalysts, Elsevier Science Publishers B.V., Amsterdam, 1988, S. 239-246
- Okado et al. in Applied Catalysis 1988, 41, S. 121-135
- WO 2012/123556 A1
- WO 2012/123557 A1
- WO 2012/123558 A1

## Patentansprüche

1. Verfahren zur Herstellung eines Katalysators für die Umwandlung von Oxygenaten zu Olefinen in Form eines Formkörpers, wobei der Katalysator einen oder mehrere Zeolithe vom MFI -Strukturtyp und Partikel eines oder mehrerer Metalloxide enthält, wobei der eine oder die mehreren Zeolithe vom MFI -Strukturtyp ein Erdalkalimetall, und die Partikel des einen oder der mehreren Metalloxide Phosphor enthalten, wobei der Phosphor zumindest teilweise in oxidischer Form vorliegt,
wobei das Erdalkalimetall Mg ist, wobei der ein oder die mehreren Zeolithe vom MFI - Strukturtyp das eine Erdalkalimetall in einer Gesamtmenge im Bereich von 0,1 bis 20 Gew.-% bezogen auf die Gesamtmenge des einen oder der mehreren Zeolithe vom MFI-Strukturtyp und berechnet als Metall enthält, wobei das eine oder die mehreren Metalloxide ausgewählt sind aus der Gruppe bestehend aus Aluminiumoxid, Titandioxid, Zirkoniumdioxid, Aluminium-Titan-Mischoxiden, Aluminium-Zirkonium-Mischoxiden, Aluminium-Lanthan-Mischoxiden, Aluminium-Zirkonium-Lanthan-Mischoxiden, Titan-Zirkonium-Mischoxiden und Mischungen von zwei oder mehr davon, und wobei der Formkörper ein Gemisch des einen oder der mehreren Zeolithe vom MFI -Strukturtyp und der Partikel des einen oder der mehreren Metalloxide enthält, umfassend
(i) Bereitstellen des einen oder der mehreren Zeolithe vom MFI -Strukturtyp;
(ii) Imprägnieren des einen oder der mehreren Zeolithe vom MFI -Stukturtyp mit einer Lösung, enthaltend das Erdalkalimetall, bevorzugt mittels Sprühtränkung;
(iii) optionales Trocknen des oder der in (ii) erhaltenen ein oder der mehreren imprägnierten Zeolithe;
(iv) optionales Kalzinieren des oder der in (ii) oder (iii) erhaltenen ein oder mehreren imprägnierten Zeolithe;
(v) Herstellen eines Gemischs, enthaltend den einen oder die mehreren imprägnierten und optional getrockneten und/oder kalzinierten Zeolithe vom MFI -Strukturtyp, ein oder mehrere Lösungsmittel und Partikel des einen oder der mehreren Metalloxide und/oder Vorläuferverbindungen des einen oder der mehreren Partikel des einen oder der mehreren Metalloxide;
(vi) Homogenisieren des in (v) erhaltenen Gemischs;
(vii) Extrudieren des in (vi) erhaltenen homogenisierten Gemischs;
(viii) optionales Trocknen des in (vii) erhaltenen Extrudats;
(ix) optionales Kalzinieren des in (vii) oder (viii) erhaltenen Extrudats;
(x) Imprägnieren des optional getrockneten und/oder kalzinierten Extrudats mit einer Phosphor enthaltenden Lösung, welche eine oder mehrere Säuren des Phosphors enthält ausgewählt aus der Gruppe bestehend aus Phosphonsäure, Phosphorsäure, Diphosphonsäure, Diphosphorsäure und Mischungen von zwei oder mehr davon;
(xi) optionales Trocknen des in (x) erhaltenen imprägnierten Extrudats;
(xii) Kalzinieren des in (x) oder (xi) erhaltenen Extrudats.

2. Verfahren zur Herstellung eines Katalysators für die Umwandlung von Oxygenaten zu Olefinen in Form eines Formkörpers, wobei der Katalysator einen oder mehrere Zeolithe vom MFI -Strukturtyp und Partikel eines oder mehrerer Metalloxide enthält, wobei der eine oder die mehreren Zeolithe vom MFI -Strukturtyp ein Erdalkalimetall, und die Partikel des einen oder der mehreren Metalloxide Phosphor enthalten, wobei der Phosphor zumindest teilweise in oxidischer Form vorliegt,
wobei das Erdalkalimetall Mg ist, wobei der ein oder die mehreren Zeolithe vom MFI - Strukturtyp das eine Erdalkalimetall in einer Gesamtmenge im Bereich von 0,1 bis 20 Gew.-% bezogen auf die Gesamtmenge des einen oder der mehreren Zeolithe vom MFI-Strukturtyp und berechnet als Metall enthält, wobei das eine oder die mehreren Metalloxide ausgewählt sind aus der Gruppe bestehend aus Aluminiumoxid, Titandioxid, Zirkoniumdioxid, Aluminium-Titan-Mischoxiden, Aluminium-Zirkonium-Mischoxiden, Aluminium-Lanthan-Mischoxiden, Aluminium-Zirkonium-Lanthan-Mischoxiden, Titan-Zirkonium-Mischoxiden und Mischungen von zwei oder mehr davon, und
wobei der Formkörper ein Gemisch des einen oder der mehreren Zeolithe vom - Strukturtyp und der Partikel des einen oder der mehreren Metalloxide enthält, umfassend
(i) Bereitstellen des einen oder der mehreren Zeolithe vom MFI -Strukturtyp;
(ii) Imprägnieren des einen oder der mehreren Zeolithe vom MFI -Stukturtyp mit einer Lösung, enthaltend das Erdalkalimetall, bevorzugt mittels Sprühtränkung;
(iii) optionales Trocknen des oder der in (ii) erhaltenen ein oder der mehreren imprägnierten Zeolithe;
(iv) optionales Kalzinieren des oder der in (ii) oder (iii) erhaltenen ein oder mehreren imprägnierten Zeolithe;
(v.1) Herstellen eines Gemischs, enthaltend den einen oder die mehreren imprägnierten und optional getrockneten und/oder kalzinierten Zeolithe vom MFI -Strukturtyp und Partikel des einen oder der mehreren Metalloxide und/oder Vorläuferverbindungen des einen oder der mehreren Partikel des einen oder der mehreren Metalloxide;
(v.2) Versetzen des in (v.1) erhaltenen Gemischs mit einer Phosphor enthaltenden Lösung, welche eine oder mehrere Säuren des Phosphors enthält ausgewählt aus der Gruppe bestehend aus Phosphonsäure, Phosphorsäure, Diphosphonsäure, Diphosphorsäure und Mischungen von zwei oder mehr davon (v.3) Vermischen des in (v.2) erhaltenen Gemischs mit einem oder mehreren Lösungsmittel;
(vi) Homogenisieren des in (v.3) erhaltenen Gemischs;
(vii) Extrudieren des in (vi) erhaltenen homogenisierten Gemischs;
(viii) optionales Trocknen des in (vii) erhaltenen Extrudats;
(ix) Kalzinieren des in (vii) oder (viii) erhaltenen Extrudats.

3. Verfahren nach Anspruch 1 oder 2, wobei nach dem Imprägnieren in (ii) oder nach dem Trocknen in (iii) oder nach dem Kalzinieren in (iv) der eine oder die mehreren imprägnierten Zeolithe vom MFI -Strukturtyp auf eine Partikelgröße D₅₀ im Bereich von 5 bis 1.000 µm gebracht werden.

4. Verfahren nach einem der Ansprüche 1 bis 3, wobei das Trocknen in (iii), (viii) und/oder (xi) bei einer Temperatur im Bereich von 50 bis 220°C erfolgt.

5. Verfahren nach einem der Ansprüche 1 bis 4, wobei das Kalzinieren in (iv), (ix) und/oder (xii) bei einer Temperatur im Bereich von 300 bis 850°C erfolgt.

6. Verfahren nach einem der Ansprüche 1 bis 5, wobei die in (ii) und/oder (x) oder (v.2) verwendete Lösung und/oder das in (v) oder (v.3) hergestellte Gemisch ein oder mehrere Lösungsmittel enthält, ausgewählt aus der Gruppe bestehend aus Alkoholen, Wasser, Mischungen von zwei oder mehreren Alkoholen, und Mischungen von Wasser und einem oder mehreren Alkoholen.

## Claims

1. A process for preparing a catalyst for the conversion of oxygenates to olefins in the form of a shaped body, wherein the catalyst comprises one or more zeolites of the MFI structure type and particles of one or more metal oxides, the one or more zeolites of the MFI structure type comprising an alkaline earth metal, and the particles of the one or more metal oxides comprising phosphorus, the phosphorus being present at least partly in oxidic form, where the alkaline earth metal is Mg, where the one or more zeolites of the MFI structure type comprise(s) the one alkaline earth metal in a total amount in the range from 0.1 to 20% by weight, based on the total amount of the one or more zeolites of the MFI structure type and calculated as the metal, where the one or more metal oxides are selected from the group consisting of alumina, titania, zirconia, aluminum-titanium mixed oxides, aluminum-zirconium mixed oxides, aluminum-lanthanum mixed oxides, aluminum-zirconium-lanthanum mixed oxides, titanium-zirconium mixed oxides and mixtures of two or more thereof, and where the shaped body comprises a mixture of the one or more zeolites of the MFI structure type and of the particles of the one or more metal oxides, comprising
(i) providing the one or more zeolites of the MFI structure type;
(ii) impregnating the one or more zeolites of the MFI structure type with a solution comprising the one alkaline earth metal, preferably by means of spray impregnation;
(iii) optionally drying the one or more impregnated zeolites obtained in (ii);
(iv) optionally calcining the one or more impregnated zeolites obtained in (ii) or (iii);
(v) preparing a mixture comprising the one or more impregnated and optionally dried and/or calcined zeolites of the MFI structure type, one or more solvents and particles of the one or more metal oxides and/or precursor compounds of the one or more particles of the one or more metal oxides;
(vi) homogenizing the mixture obtained in (v) ;
(vii) extruding the homogenized mixture obtained in (vi);
(viii) optionally drying the extrudate obtained in (vii);
(ix) optionally calcining the extrudate obtained in (vii) or (viii);
(x) impregnating the optionally dried and/or calcined extrudate with a phosphorus-comprising solution which comprises one or more acids of phosphorus selected from the group consisting of phosphonic acid, phosphoric acid, diphosphonic acid, diphosphoric acid and mixtures of two or more thereof;
(xi) optionally drying the impregnated extrudate obtained in (x);
(xii) calcining the extrudate obtained in (x) or (xi) .

2. A process for preparing a catalyst for the conversion of oxygenates to olefins in the form of a shaped body, wherein the catalyst comprises one or more zeolites of the MFI structure type and particles of one or more metal oxides, the one or more zeolites of the MFI structure type comprising an alkaline earth metal, and the particles of the one or more metal oxides comprising phosphorus, the phosphorus being present at least partly in oxidic form, where the alkaline earth metal is Mg, where the one or more zeolites of the MFI structure type comprise(s) the one alkaline earth metal in a total amount in the range from 0.1 to 20% by weight, based on the total amount of the one or more zeolites of the MFI structure type and calculated as the metal, where the one or more metal oxides are selected from the group consisting of alumina, titania, zirconia, aluminum-titanium mixed oxides, aluminum-zirconium mixed oxides, aluminum-lanthanum mixed oxides, aluminum-zirconium-lanthanum mixed oxides, titanium-zirconium mixed oxides and mixtures of two or more thereof, and where the shaped body comprises a mixture of the one or more zeolites of the MFI structure type and of the particles of the one or more metal oxides, comprising
(i) providing the one or more zeolites of the MFI structure type;
(ii) impregnating the one or more zeolites of the MFI structure type with a solution comprising the alkaline earth metal, preferably by means of spray impregnation;
(iii) optionally drying the one or more impregnated zeolites obtained in (ii);
(iv) optionally calcining the one or more impregnated zeolites obtained in (ii) or (iii);
(v.1) preparing a mixture comprising the one or more impregnated and optionally dried and/or calcined zeolites of the MFI structure type and particles of the one or more metal oxides and/or precursor compounds of the one or more particles of the one or more metal oxides;
(v.2) admixing the mixture obtained in (v.1) with a phosphorus-comprising solution which comprises one or more acids of phosphorus selected from the group consisting of phosphonic acid, phosphoric acid, diphosphonic acid, diphosphoric acid and mixtures of two or more thereof;
(v.3) mixing the mixture obtained in (v.2) with one or more solvents;
(vi) homogenizing the mixture obtained in (v.3);
(vii) extruding the homogenized mixture obtained in (vi);
(viii) optionally drying the extrudate obtained in (vii);
(ix) calcining the extrudate obtained in (vii) or (viii).

3. The process according to claim 1 or 2, wherein the impregnating in (ii) or the drying in (iii) or the calcining in (iv) is followed by bringing the one or more impregnated zeolites of the MFI structure type to a particle size D₅₀ in the range from 5 to 1000 µm.

4. The process according to any of claims 1 to 3, wherein the drying in (iii), (viii) and/or (xi) is effected at a temperature in the range from 50 to 220°C.

5. The process according to any of claims 1 to 4, wherein the calcining in (iv), (ix) and/or (xii) is effected at a temperature in the range from 300 to 850°C.

6. The process according to any of claims 1 to 5, wherein the solution used in (ii) and/or (x) or (v.2) and/or the mixture prepared in (v) or (v.3) comprises one or more solvents selected from the group consisting of alcohols, water, mixtures of two or more alcohols, and mixtures of water and one or more alcohols.

## Revendications

1. Procédé de fabrication d'un catalyseur pour la transformation de composés oxygénés en oléfines sous la forme d'un corps moulé, le catalyseur contenant une ou plusieurs zéolithes de type structural MFI et des particules d'un ou de plusieurs oxydes de métaux, la ou les zéolithes de type structural MFI contenant un métal alcalino-terreux, et les particules du ou des oxydes de métaux contenant du phosphore, le phosphore se présentant au moins en partie sous forme oxydique,
le métal alcalino-terreux étant Mg, la ou les zéolithes de type structural MFI contenant le métal alcalino-terreux en une quantité totale dans la plage allant de 0,1 à 20 % en poids, par rapport à la quantité totale de la ou des zéolithes de type structural MFI et calculé en tant que métal, le ou les oxydes de métaux étant choisis dans le groupe constitué par l'oxyde d'aluminium, le dioxyde de titane, le dioxyde de zirconium, les oxydes mixtes d'aluminium et de titane, les oxydes mixtes d'aluminium et de zirconium, les oxydes mixtes d'aluminium et de lanthane, les oxydes mixtes d'aluminium, de zirconium et de lanthane, les oxydes mixtes de titane et de zirconium, et les mélanges de deux ou plus d'entre eux, et le corps moulé contenant un mélange de la ou des zéolithes de type structural MFI et des particules du ou des oxydes de métaux, comprenant :
(i) la préparation de la ou des zéolithes de type structural MFI ;
(ii) l'imprégnation de ou des zéolithes de type structural MFI avec une solution contenant le métal alcalino-terreux, de préférence par imprégnation par pulvérisation ;
(iii) éventuellement le séchage de la ou des zéolithes imprégnées obtenues en (ii) ;
(iv) éventuellement la calcination de la ou des zéolithes imprégnées obtenues en (ii) ou (iii) ;
(v) la fabrication d'un mélange contenant la ou les zéolithes de type structural MFI imprégnées et éventuellement séchées et/ou calcinées, un ou plusieurs solvants et des particules du ou des oxydes de métaux et/ou des composés précurseurs de la ou des particules du ou des oxydes de métaux ;
(vi) l'homogénéisation du mélange obtenu en (v) ;
(vii) l'extrusion du mélange homogénéisé obtenu en (vi) ;
(viii) éventuellement le séchage du produit extrudé obtenu en (vii) ;
(ix) éventuellement la calcination du produit extrudé obtenu en (vii) ou (viii) ;
(x) l'imprégnation du produit extrudé éventuellement séché et/ou calciné avec une solution contenant du phosphore, qui contient un ou plusieurs acides du phosphore, choisis dans le groupe constitué par l'acide phosphonique, l'acide phosphorique, l'acide diphosphonique, l'acide diphosphorique et les mélanges de deux ou plus d'entre eux ;
(xi) éventuellement le séchage du produit extrudé imprégné obtenu en (x) ;
(xii) la calcination du produit extrudé obtenu en (x) ou (xi).

2. Procédé de fabrication d'un catalyseur pour la transformation de composés oxygénés en oléfines sous la forme d'un corps moulé, le catalyseur contenant une ou plusieurs zéolithes de type structural MFI et des particules d'un ou de plusieurs oxydes de métaux, la ou les zéolithes de type structural MFI contenant un métal alcalino-terreux, et les particules du ou des oxydes de métaux contenant du phosphore, le phosphore se présentant au moins en partie sous forme oxydique,
le métal alcalino-terreux étant Mg, la ou les zéolithes de type structural MFI contenant le métal alcalino-terreux en une quantité totale dans la plage allant de 0,1 à 20 % en poids, par rapport à la quantité totale de la ou des zéolithes de type structural MFI et calculé en tant que métal, le ou les oxydes de métaux étant choisis dans le groupe constitué par l'oxyde d'aluminium, le dioxyde de titane, le dioxyde de zirconium, les oxydes mixtes d'aluminium et de titane, les oxydes mixtes d'aluminium et de zirconium, les oxydes mixtes d'aluminium et de lanthane, les oxydes mixtes d'aluminium, de zirconium et de lanthane, les oxydes mixtes de titane et de zirconium, et les mélanges de deux ou plus d'entre eux, et le corps moulé contenant un mélange de la ou des zéolithes de type structural et des particules du ou des oxydes de métaux, comprenant :
(i) la préparation de la ou des zéolithes de type structural MFI ;
(ii) l'imprégnation de ou des zéolithes de type structural MFI avec une solution contenant le métal alcalino-terreux, de préférence par imprégnation par pulvérisation ;
(iii) éventuellement le séchage de la ou des zéolithes imprégnées obtenues en (ii) ;
(iv) éventuellement la calcination de la ou des zéolithes imprégnées obtenues en (ii) ou (iii) ;
(v.1) la fabrication d'un mélange contenant la ou les zéolithes de type structural MFI imprégnées et éventuellement séchées et/ou calcinées et des particules du ou des oxydes de métaux et/ou des composés précurseurs de la ou des particules du ou des oxydes de métaux ;
(v.2) le mélange du mélange obtenu en (v.1) avec une solution contenant du phosphore, qui contient un ou plusieurs acides du phosphore, choisis dans le groupe constitué par l'acide phosphonique, l'acide phosphorique, l'acide diphosphonique, l'acide diphosphorique et les mélanges de deux ou plus d'entre eux ;
(v.3) le mélange du mélange obtenu en (v.2) avec un ou plusieurs solvants ;
(vi) l'homogénéisation du mélange obtenu en (v.3) ;
(vii) l'extrusion du mélange homogénéisé obtenu en (vi) ;
(viii) éventuellement le séchage du produit extrudé obtenu en (vii) ;
(ix) la calcination du produit extrudé obtenu en (vii) ou (viii).

3. Procédé selon la revendication 1 ou 2, dans lequel, après l'imprégnation en (ii) ou après le séchage en (iii) ou après la calcination en (iv), la ou les zéolithes imprégnées de type structural MFI sont mises à une taille de particule D₅₀ dans la plage allant de 5 à 1 000 µm.

4. Procédé selon l'une quelconque des revendications 1 à 3, dans lequel le séchage en (iii), (viii) et/ou (xi) a lieu à une température dans la plage allant de 50 à 220 °C.

5. Procédé selon l'une quelconque des revendications 1 à 4, dans lequel la calcination en (iv), (ix) et/ou (xii) a lieu à une température dans la plage allant de 300 à 850 °C.

6. Procédé selon l'une quelconque des revendications 1 à 5, dans lequel la solution utilisée en (ii) et/ou (x) ou (v.2) et/ou le mélange fabriqué en (v) ou (v.3) contient un ou plusieurs solvants, choisis dans le groupe constitué par les alcools, l'eau, les mélanges de deux alcools ou plus, et les mélanges d'eau et d'un ou de plusieurs alcools.
